(19) **Europäisches Patentamt European Patent Office Office européen des brevets**

(11) **EP 3 484 668 B1**

(12) **EUROPEAN PATENT SPECIFICATION**

(45) Date of publication and mention of the grant of the patent:
**07.06.2023 Bulletin 2023/23**

(21) Application number: **17748973.9**

(22) Date of filing: **14.07.2017**

(51) International Patent Classification (IPC):
**B25J 5/00** (2006.01)    **B25J 11/00** (2006.01)
**B25J 9/00** (2006.01)    **B25J 15/00** (2006.01)
**B65G 59/00** (2006.01)    **B25J 15/06** (2006.01)
**B25J 19/02** (2006.01)    **B65G 67/02** (2006.01)

(52) Cooperative Patent Classification (CPC):
**B25J 5/00; B25J 9/0093; B25J 11/008; B25J 15/0616; B65G 67/02;** B25J 19/02; B25J 19/021

(86) International application number:
**PCT/US2017/042031**

(87) International publication number:
**WO 2018/013876 (18.01.2018 Gazette 2018/03)**

(54) **AUTONOMOUS CONTROLS FOR A ROBOTIC CARTON UNLOADER**

AUTONOME STEUERUNGEN FÜR EINEN ROBOTISCHEN KARTONENTLADER

COMMANDES AUTONOMES POUR UN SYSTÈME ROBOTIQUE DE DÉCHARGEMENT DE CARTONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2016 US 201662362100 P**
**01.08.2016 US 201662369435 P**
**04.11.2016 US 201662417368 P**
**15.11.2016 US 201615351960**

(43) Date of publication of application:
**22.05.2019 Bulletin 2019/21**

(73) Proprietor: **Intelligrated Headquarters, LLC Mason, OH 45040 (US)**

(72) Inventors:
• **WICKS, Matthew, R.**
**St. Charles, MO 63304 (US)**
• **SIMONS, John**
**St. Louis, MO 63118 (US)**
• **GIRTMAN, Michael, L.**
**Morris Plains, NJ New Jersey 07950 (US)**
• **ROTH, Michael, J.**
**Fenton, MO 63026 (US)**

(74) Representative: **Haseltine Lake Kempner LLP Cheapside House 138 Cheapside London EC2V 6BJ (GB)**

(56) References cited:
**WO-A1-2016/033172    US-A1- 2008 267 756**
**US-A1- 2016 016 311**

**Description**

BACKGROUND

1. Technical Field

The present disclosure generally relates to article unloading systems, and more specifically to autonomous unloading system that can enter and unload unpalletized cartons from a carton pile within confined space such as a shipping container or truck trailer.

2. Description of the Related Art

Trucks and trailers loaded with cargo and products move across the country to deliver products to commercial loading and unloading docks at stores, warehouses, and distribution centers. Trucks can have a trailer mounted on the truck, or can be of a tractor-semi trailer configuration. To lower overhead costs at retail stores, in-store product counts have been reduced, and products-in-transit now count as part of available store stock. Unloading trucks quickly at the unloading docks of warehouses and regional distribution centers has attained new prominence as a way to refill depleted stock.

Trucks are typically unloaded with forklifts if the loads are palletized and with manual labor if the products are stacked within the trucks. Unloading large truck shipments manually with human laborers can be physically difficult, and can be costly due to the time and labor involved. Consequently, a need exists for an improved unloading system that can unload stacked cases and cargo from truck trailers more quickly than human laborers and at a reduced cost.

WO2016/033172 discloses a robotic carton unloader for automatic unloading of cartons from a carton pile. In various embodiments, a robotic carton unloader may include a mobile body, a movable robotic arm attached to the mobile body and comprising an end effector, a conveyor system having a front portion, and a lift attached to the mobile body and the front portion of the conveyor system to move the front portion. In some embodiments, the conveyor system may comprise a front-end shelf conveyor configured to be moved (e.g., raised, lowered, laterally moved, tilted, etc.) relative to the body of the unloader. The front-end shelf conveyor may be moved separately for positioning below the robotic arm in order to receive cartons from a small distance. The front-end shelf conveyor may be moved via various mechanisms (e.g., scissor lifts, pedestal lifts, etc.).

US2008/267756 discloses a robot, comprising a horizontal linear axis with a movable carriage and a joint arm, the one end of which is connected to one of the ends of the carriage by means of a rotating joint in the direction of travel thereof, characterized in that the joint arm may rotate in a plane at an angle a in the range of 45° to 90° to the horizontal and at least two joint arm pieces which may rotate relative to each other in said plane and with an effector, provided at the free moving end of the outer joint arm.

US2016/016311 discloses systems and methods may be used to determine a trajectory for moving an object using a robotic device. One example method includes determining a plurality of possible trajectories for moving an object with an end effector of a robotic manipulator based on a plurality of possible object measurements. The method may further include causing the robotic manipulator to pick up the object with the end effector. Alter causing the robotic manipulator to pick up the object with the end effector, the method may also include receiving sensor data from one or more sensors indicative of one or more measurements of the object. Based on the received sensor data, the method may additionally include selecting a trajectory for moving the object from the plurality of possible trajectories. The method may further include causing the robotic manipulator to move the object through the selected trajectory.

BRIEF SUMMARY

Embodiments of the invention are set out in the appended set of claims.

**BRIEF DESCRIPTION OF THE DRAWINGS**

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:

FIG. 1 illustrates a side view with functional block diagram of a robotic carton unloader and extendable conveyor unloading cartons from within a carton pile container, according to one or more embodiments;

**FIG. 2** illustrates a top isometric view of the robotic carton unloader of **FIG. 1,** according to one or more embodiments;

**FIG. 3** illustrates a bottom isometric view of the robotic carton unloader of **FIG. 1,** according to one or more embodiments;

**FIG. 4** illustrates a side view of a forward portion of the robotic carton unloader of **FIG. 1,** according to one or more embodiments;

**FIG. 5** illustrates a side view of the front portion of conveyor system and lift of the robotic carton unloader of **FIG. 1** annotated with a first set of geometric dimensions, according to one or more embodiments;

**FIG. 6** illustrates the side view of the front portion of conveyor system and lift of the robotic carton unloader of **FIG. 1** annotated with a second set of geometric dimensions, according to one or more embodiments;

**FIG. 7** illustrates the side view of the front portion of conveyor system and lift of the robotic carton unloader of **FIG. 1** annotated with a third set of geometric dimensions, according to one or more embodiments;

**FIG. 8A** illustrates the side view of the front portion of conveyor system and lift of the robotic carton unloader of **FIG. 1** annotated with a fourth set of geometric dimensions, according to one or more embodiments;

**FIG. 8B** illustrates a top view of a forward portion of the robotic carton unloader of **FIG. 1** annotated with a fifth set of geometric dimensions, according to one or more embodiments;

**FIG. 9A** illustrates a geometric graph of a robotic carton unloader on a declining dock leveler approaching an inclining trailer floor;

**FIG. 9B** illustrates a detail view of the geometric graph of **FIG. 9B;**

**FIG. 9C** illustrates a geometric graph representing the law of sines;

**FIG. 9D** illustrates a geometric graph of applying the law of sines to the geometric graph of **FIG. 9B;**

**FIG. 9E** illustrates a geometric graph of the robotic carton unloader straddling the declining dock leveler and the inclining trailer floor;

**FIG. 9F** illustrates a detail view of the geometric graph of **FIG. 9E;**

**FIG. 9G** illustrates a geometric graph of the robotic carton unloader straddling an inclining dock leveler and an inclining trailer floor that has a lower pitch than the dock leveler;

**FIG. 9H** illustrates a detail view of the geometric graph of **FIG. 9G;**

**FIG. 10** illustrates a top view of the robotic carton unloader of **FIG. 1** with the forward portion of the conveyor system centered, according to one or more embodiments;

**FIG. 11** illustrates a top view of the robotic carton unloader of **FIG. 1** with the forward portion of the conveyor system laterally shifted, according to one or more embodiments;

**FIG. 12** illustrates a side view of the robotic carton unloader of **FIG. 1** with a lift raised and a transition belt connecting the front and rear portions of the conveyor system, according to one or more embodiments;

**FIG. 13** illustrates a side view of the robotic carton unloader of **FIG. 12** with the lift partially raised and the transition belt connecting the front and rear portions of the conveyor system, according to one or more embodiments;

**FIG. 14** illustrates a side view of the robotic carton unloader of **FIG. 12** with the lift lowered and level and the transition belt connecting the front and rear portions of the conveyor system, according to one or more embodiments;

**FIG. 15** illustrates a side view of the robotic carton unloader of **FIG. 12** with the lift lowered and tilted and the transition belt connecting the front and rear portions of the conveyor system, according to one or more embodiments;

**FIG. 16** illustrates a side view of the robotic carton unloader of **FIG. 1** with the lift lowered and tilted down to shadow a manipulator head of the robotic arm assembly reaching a bottom row of cartons, according to one or more embodiments;

**FIG. 17** illustrates a side view of the robotic carton unloader of **FIG. 1** with the lift lowered and partially tilted down to shadow the manipulator head of the robotic arm assembly reaching a slightly higher row of cartons, according to one or more embodiments;

**FIG. 18** illustrates a side view of the robotic carton unloader of **FIG. 1** with the lift lowered and level to shadow the manipulator head of the robotic arm assembly reaching a yet higher row of cartons, according to one or more embodiments;

**FIG. 19** illustrates a side view of the robotic carton unloader of **FIG. 1** with the lift lowered and partially tilted up to shadow the manipulator head of the robotic arm assembly reaching a yet higher row of cartons, according to one or more embodiments;

**FIG. 20** illustrates a front isometric view of a telescoping beam in an extended state and having a boom locking mechanism of the robotic carton unloader of **FIG. 1,** according to one or more embodiments;

**FIG. 21** illustrates a rear isometric view of the telescoping beam of **FIG. 20** in an extended state and having the boom locking mechanism, according to one or more embodiments;

**FIG. 22** illustrates a longitudinal cutaway view of the telescoping beam of **FIG. 20** in a fully retracted state, according to one or more embodiments;

**FIG. 23** illustrates a longitudinal cutaway view of the telescoping beam of **FIG. 20** in a fully extended state, according to one or more embodiments;

**FIG. 24** illustrates a rear cutaway view of the telescoping beam of **FIG. 20,** according to one or more embodiments;

**FIG. 25** illustrates a simplified side view of a robotic carton unloader raised by a built-in jacking apparatus, according to one or more embodiments;

**FIG. 26** illustrates a simplified top view of the robotic carton unloader of **FIG. 25** raised by the built-in jacking apparatus, according to one or more embodiments;

**FIG. 27** illustrates a simplified top view of the robotic carton unloader of **FIG. 25** in a nominal state, according to one or more embodiments;

**FIG. 28** illustrates a simplified top view of the robotic carton unloader of **FIG. 27** having a wheel that passed through the floor, according to one or more embodiments;

**FIG. 29** illustrates a simplified top view of the robotic carton unloader of **FIG. 28** with a built-in jacking apparatus extended to raise the wheel out of the floor, according to one or more embodiments;

**FIG. 30** illustrates a simplified top view of the robotic carton unloader of **FIG. 29** with the built-in jacking apparatus extended and partially canted longitudinally move the wheel away from a damaged section of the floor, according to one or more embodiments;

**FIG. 31** illustrates a simplified top view of the robotic carton unloader of **FIG. 30** with the built-in jacking apparatus extended and fully canted to further longitudinally move and lower the wheel to an undamaged section of the floor, according to one or more embodiments;

**FIG. 32** illustrates an exemplary computing environment for an onboard unloading controller of the robotic carton unloader **of FIG. 1,** according to one or more embodiments; and

FIG. 33 illustrates a graphical plot of the relationship between error and the distance from the tag to the camera.

## DETAILED DESCRIPTION

Robotic carton unloader has right and left lower arms of robotic arm assembly that are pivotally attached at lower end respectively to mobile body on opposing lateral sides of conveyor system passing there between. Upper arm assembly has rear end pivotally attached at upper end respectively of right and left lower arms to pivotally rotate about upper arm axis perpendicular to longitudinal axis of conveyor system and parallel to lower arm axis. Manipulator head attached to front end of upper arm assembly engages carton/s from carton pile resting on floor for movement to conveyor system. Upper arm axis is maintained at a height that enables carton/s to be conveyed by conveyor system without being impeded by robotic arm assembly as soon as manipulator head is clear. Lift attached between mobile body and front portion of conveyor system reduces spacing underneath carton/s during movement from carton pile to conveyor system.

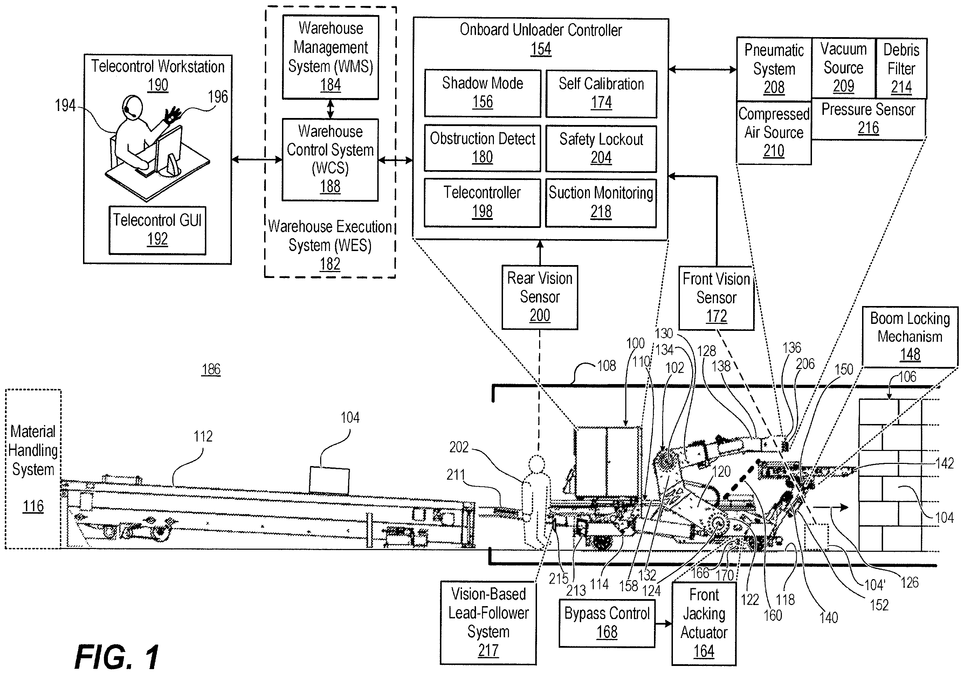

FIG. 1 illustrates a robotic carton unloader 100 having a robotic arm assembly 102 unloads cartons 104 from a carton pile 106 inside of a carton pile container 108, such as a trailer, shipping container, storage unit, etc. Robotic arm assembly 102 places the cartons 104 onto a conveyor system 110 of the robotic carton unloader 100 that conveys the cartons 104 back to an extendable conveyor 112 that follows a mobile body 114 of the robotic carton unloader 100 into the carton pile container 108. The extendable conveyor 112 in turn conveys the cartons 104 to a material handling system 116 such as in a warehouse, store, distribution center, etc.

In one or more embodiments, the robotic carton unloader 100 autonomously unloads a carton pile 106 resting on a floor 118 of the carton pile container 108. The mobile body 114 is self-propelled and movable across the floor 118 from outside to the innermost portion of the carton pile container 108. Right and left lower arms 120 of the robotic arm assembly 102 are pivotally attached at a lower end 122 respectively to the mobile body 114 on opposing lateral sides of the conveyor system 110 passing there between. The right and left lower arms 120 rotate about a lower arm axis 124 that is perpendicular to a longitudinal axis 126 of the conveyor system 110. An upper arm assembly 128 of the robotic arm assembly 102 has a rear end 130 pivotally attached at an upper end 132 respectively of the right and left lower arms 120 to pivotally rotate about an upper arm axis 134 that is perpendicular to the longitudinal axis 126 of the conveyor system 110 and parallel to the lower arm axis 124. A manipulator head 136 is attached to a front end 138 of the upper arm assembly 128 and engages at least one carton 104 at a time from the carton pile 106 resting on the floor 118 for movement to the conveyor system 110. The pivotal and simultaneous mirrored movement of the right and left lower arms 120 maintains the upper arm axis 134 at a relative height above the conveyor system 110 that enables the at least one carton 104 to be conveyed by the conveyor system 110 without being impeded by the robotic arm assembly 102 as soon as the manipulator head 136 is clear.

In one or more embodiments, the robotic carton unloader 100 includes a lift 140 attached between the mobile body 114 and a front portion 142 of the conveyor system 110. The lift 140 moves the front portion 142 of the conveyor system 110 relative to the floor 118 to reduce spacing underneath the at least one carton 104 during movement from the carton pile 106 to the conveyor system 110. The lift 140 has a telescoping beam 144 having a drive member 146 that actuates to extend and retract the telescoping beam 144. The drive member 146 can have a failure mode that allows the telescoping beam 144 to retract. A locking boom mechanism 148 is responsive to the failure mode of the drive member 146 to at least slow a rate of retraction of the telescoping beam 144.

In one or more embodiments, the telescoping beam 144 can be pivotally attached to the front portion 142 of the conveyor system 110 for rotation about a front axis 150 that is transverse to the longitudinal axis of the conveyor system and parallel to the lower and upper arm axes. A pivot actuator 152 is attached between the telescoping beam 144 and the front portion 142 of the conveyor system 110. An onboard unloader controller 154 is in communication with the pivot actuator 152, the drive member 146, and the robotic arm assembly 102. The controller 154 executes instructions for a shadow mode module 156 to position a vertical height and pitch of the front portion 142 of the conveyor system 110 to parallel the manipulator head 136 when moving carton/s 104.

In one or more embodiments, the controller 156 retracts the front portion 142 of the conveyor system 110 to convey the received carton/s 104 to a rear portion 158 of the conveyor system 110. In one or more embodiments, a transition carton guiding structure such as a transition belt 160 is attached between the front portion 142 and a rear portion 158 of the conveyor system 110. The transition belt 160 adjusts in length and pitch in response to movement of the lift 140 and conveys carton/s 104 from the front portion 142 to the rear portion 158 with having to retract the lift 140 to increase throughput of the robotic carton unloader 100.

In one or more embodiments, the mobile body 114 of the robotic carton unloader 100 is supported on steerable wheels 162. In the event that power is unavailable to control or drive the steerable wheels 162, a front jacking actuator 164 can extend a built-in jacking apparatus 166 that raises mobile body 114 a distance sufficient to raise at least one steerable wheel 162 away from contacting the floor 118. The front jacking actuator 164 receives control and power from a bypass control 168 that is independent of the controls and power provided to the mobile body 114 and robotic arm assembly **102.** The bypass control **168** can be mechanical, electrical, pneumatic, hydraulic, etc. The built-in jacking apparatus **166** can have a lower end **170** with a skid surface or a rolling surface. The built-in jacking apparatus **166** can also be used to raise the mobile body **114** in the event that a wheel **162** becomes stuck in a damaged portion of the floor **118.**

In one or more embodiments, the robotic carton unloader **100** can include at least one front vision sensor **172** that can perform at least one of detecting cartons **104** of the carton pile **106,** detecting a dropped carton **104',** and detecting features of the robotic arm assembly **102** and front portion **142** of the conveyor system **110.** The controller **154** can execute a self-calibration module **174** that determines a three-dimension position of the features of the robotic arm assembly **102** and front portion **142** of the conveyor system **110.** For example, the front vision sensor **172** can be inherently three-dimensional such as including a distance measuring signal. Alternatively, the front vision sensor **172** can include multiple two-dimensional vision sensors from which a binocular effect can derive three-dimensional information. Alternatively, image processing for known physical dimensions of the features can be used to calculate three dimensional information. The self-calibration module **174** can include instructions to calibrate the robotic arm assembly **102** by: (a) commanding the robotic arm assembly **102** to a defined position; (b) detecting the three-dimensional position of the robotic arm assembly **102** in the image received from the front vision sensor **172,** and (c) calculating a calibration adjustment based on an error between the defined position and the detected position.

In one or more embodiments, the controller **154** can execute an obstruction detection module **180** that determines whether an object such as the dropped carton **104'** is proximate to the mobile body **114.** Similarly, the obstruction detection module **180** can determine that a portion of the carton pile container **108** is proximate to the mobile body **114.** The obstruction detection module **180** can determine that the object can be damaged by movement of the selected one of the robotic arm assembly **102,** the lift **140,** and the mobile body **114.** In response to determining that the object is proximate to the mobile body **114** and can be damaged, the object detection module **180** can prevent or constrain the movement of the selected one of the robotic arm assembly **102,** lift **140** and the mobile body **114.**

The obstruction detection module **180** can thus constrain automatic, manual or telecontrol operations of the robotic carton unloader **100.** For example, a warehouse execution system (WES) **182** can have a warehouse management system (WMS) **184** that controls order fulfillment, labor management, and inventory tracking for a facility **186** such as a distribution center. WES **182** can include a warehouse control system (WCS) **188** that controls automation that carries out the order fulfillment and inventory movements requested by the WMS **184.** A telecontrol workstation **190** can provide a telecontrol graphical user interface (GUI) **192** that allows a remote operator **194,** such as using an instrumented glove **196,** to takeover certain control functions of the robotic carton unloader **100.** For instance, the controller **154** may be unable to engage a carton **104** from the carton pile **106** or the dropped carton **104'.** A telecontroller module **198** executed by the controller **154** can be responsive to the telecontrol GUI **192** via the WCS **188** but be limited by the obstruction detection module **180** to prevent damage to the robotic carton unloader **100** or the carton pile container **108.** Similarly, in one or more embodiments, the robotic carton unloader **100** further includes a rear vision sensor **200** that can detect objects such as a local operator **202** that is performing maintenance on or an inspection of the robotic carton unloader **100.** A safety lockout module **204** of the controller **154** can be responsive to one or more inputs to prevent automatic or manual movement of the robotic carton unloader **100,** such as an open access door or an interrupted light curtain at a rear side of the robotic carton unloader **100,** or an inserted lockout pin (not shown). If such safety lock outs should be defeated or fail for some reason, the obstruction detection module **180** with imagery provided by either or both of the front and rear vision sensors **172, 200** can prevent movement of the robotic carton unloader **100** altogether or at least prevent movement that can cause damage or injury.

In one or more embodiments, the manipulator head **136** includes at least one vacuum manipulator **206.** The robotic carton unloader **100** has a pneumatic system **208** to selectively perform a sequence of operations of (i) engaging the at least one carton **104** with suction from a vacuum source **209;** (ii) disengaging the at least one carton **104** by removing the suction; and (iii) clearing debris from the at least one vacuum manipulator **206** by directing compressed air from a compressed air source **210** through the at least one vacuum manipulator **206.** Such clearing can be open-loop controlled, routinely occurring a portion of the cycle in which no carton **104** is expected to block the at least one vacuum manipulator **206.** For example, the pneumatic system **208** can couple a compressed air source **210** to speed disengagement of the vacuum manipulator **206** from the carton/s **104** and to simultaneously clean debris from the vacuum manipulator **206.**

In one or more embodiments, a suction monitoring module **212** of the controller **154** can perform closed-loop control of debris clearing or at least debris reporting. For example, a debris filter **214** can capture or block debris from reaching sensitive pneumatic valves with the pneumatic system **208.** Detecting the debris filter **214** being covered or filled with debris can be used to trigger a manual cleaning or filter replacement task. In an exemplary embodiment, a pressure sensor **216** in pneumatic communication with the pneumatic system **208** to detect a pressure indication associated with the at least one vacuum manipulator **206.** The controller **154** is in communication with a vision system such as the front vision sensor **172,** the pneumatic system **208** and the pressure sensor **216.** The controller **154** executes instructions of a suction monitoring module **218** to selectively clear debris from the at least one vacuum manipulator by: (a) receiving an image of the carton pile **106;** (b) detecting the at least one carton **104** in the carton pile **106** from the image; (c) positioning the manipulator head **136** to engage the at least one carton **104** with the at least one vacuum manipulator **206;** (d) causing the pneumatic system **208** to couple the vacuum source **209** to the at least one vacuum manipulator **206;** (e) moving the robotic arm assembly **102** and the lift **140** to position the at least one carton **104** on the conveyor system **110;** (f) disengaging the at least one carton **104** by causing the pneumatic system **208** to decouple the vacuum source **209** from the at least one vacuum manipulator **206;** (g) moving the robotic arm assembly **102** away from the at least one carton **104** to enable conveying of the at least one carton **104** by the conveyor system **110;** (h) determining that the at least one vacuum manipulator **206** is clogged with debris; and (i) clearing debris from the at least one vacuum manipulator **206** by directing the pneumatic system **208** to couple the compressed air source **210** through the at least one vacuum manipulator **206.**

Independent but coordinated movement of a telescoping end **211** of the extendable conveyor **112** and the robotic carton unloader **100** can be achieved by a 3-axis string encoder (not shown). Alternatively, the robotic carton unloader **100** can include an augmented reality (AR) target **213** that is imaged by a camera **215** on the extendable conveyor **112.** A vision=based lead-follower system **217** coordinates movement of the extendable conveyor **112** and the robotic carton unloader **100** to maintain alignment and spacing for proper conveying of articles **104.**

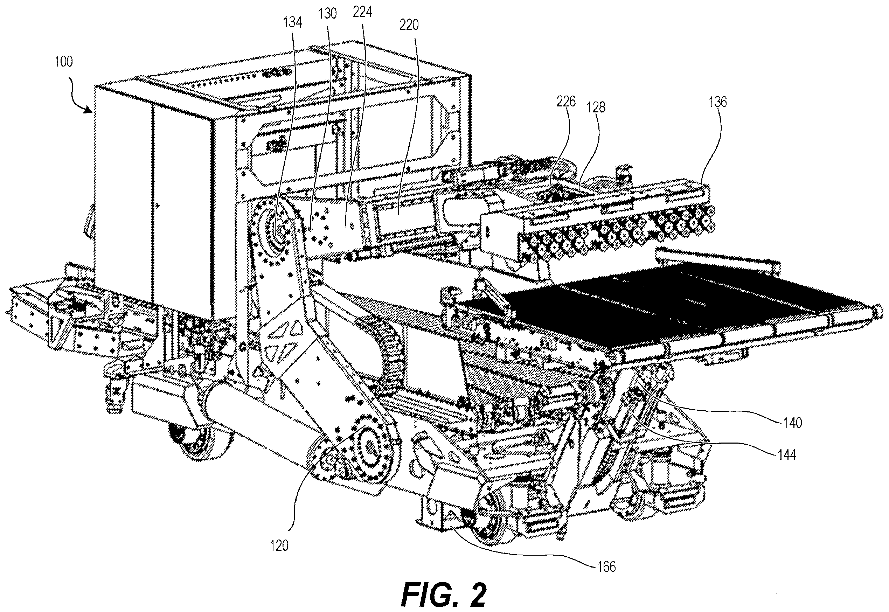

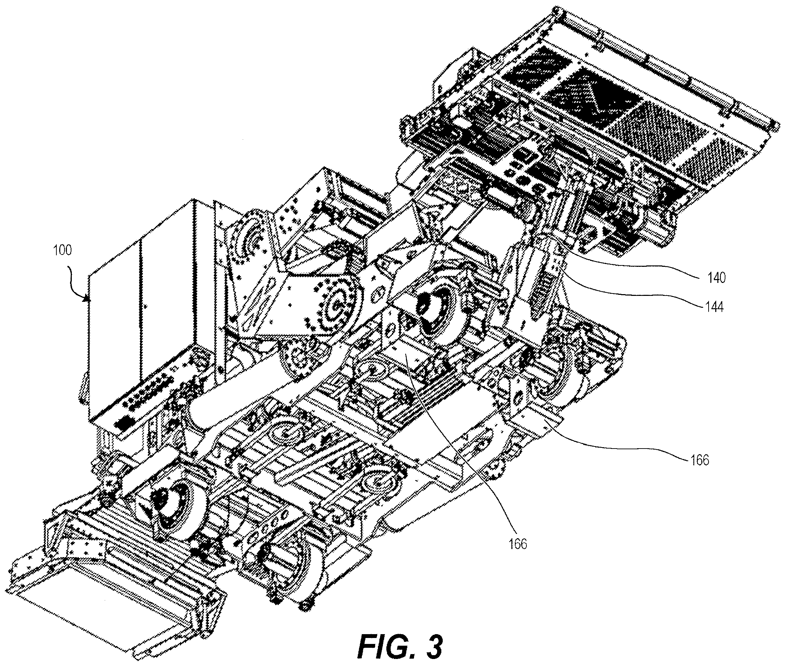

FIG. 2 illustrates that the upper arm assembly **128** includes a rotatable gantry **220** having the rear end **130** pivotally attached at the upper arm axis **134** to the left and right lower arms **120.** The rotatable gantry **220** has a lateral guide **222** at an extended end **114.** The upper arm assembly **128** includes an end arm **226** proximally attached for lateral movement to the lateral guide **222** of the rotatable gantry **220** and distally attached to the manipulator head **136.** The end arm **226** laterally translates to reach an increased lateral area. Thereby a lighter weight and more maneuverable manipulator head **136** can be employed. **FIGs. 2-3** illustrate the telescoping beam **144** of the lift **140** and the built-in jacking apparatus **166.** A nose tilting hydraulic actuator **225** is mounted between the telescoping beam **144** and a forward end of the front portion **142** of the conveyor system **110.** A drive belt motor **227** is mounted to the telescoping beam **144** to extend and to retract the telescoping beam **144.**

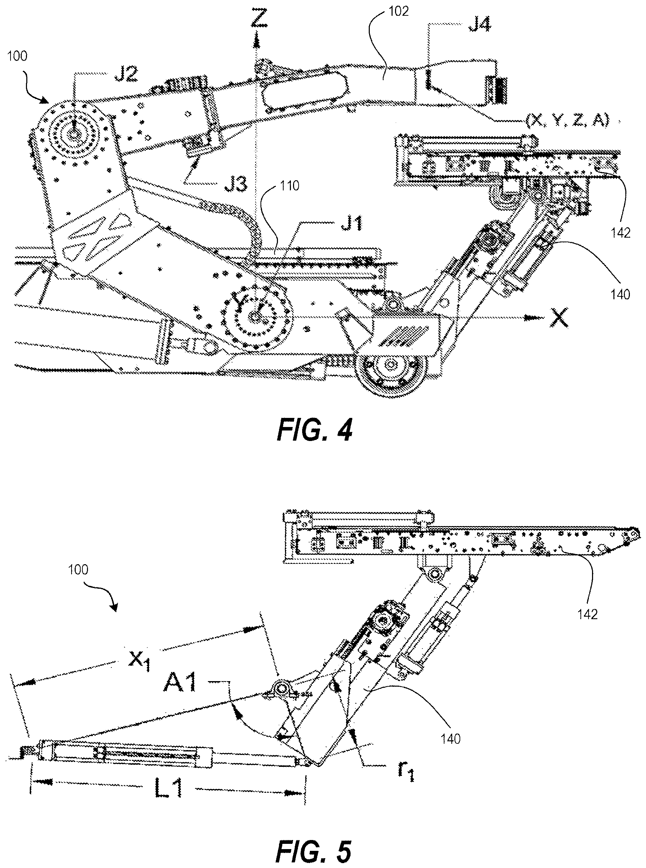

FIG. 4 illustrates the coordinated positions of robotic arm assembly **102** and front portion **142** of the conveying system **110** positioned by the lift **140** of the robotic carton unloader **100.** To facilitate controlling the various actuators, **FIG. 4** illustrates manipulator joint positions are the result of transforming the Cartesian coordinates (x, y, z, A), to SCARA coordinates (J, J2, J3, A). The inverse transform is done to calculate the Cartesian coordinates from the SCARA coordinates. The transform calculations are done on the (x, z) and (J1, J3) coordinates using the MCTP function block available in the Logix Designer software. Y= J3, and A is defined as the angle of the tool with respect to the X axis and is the same in both coordinate systems. The coordinated motion of joints J1, J2 is accomplished using the MCT function block to link the joint axis to the virtual Cartesian axis X and Z. The motion is then commanded using the virtual axis X, Y, Z and the MCLM function block. J3=Y and is the same in both coordinate systems.

Manipulator:

$A_{j1}$ = Actual angle of Axis J1 (Deg).

$A_{j2}$ = Actual angle of Axis J2 (Deg).

$J_3$ = Actual position of Axis J3 (mm).

$A_{j4}$ = Actual angle of the tool Axis J4 (Deg).

A = Angle of the tool in world frame (Deg).

X = Manipulator cartesian coordinate virtual axis x(mm).

Y = Manipulator cartesian coordinate virtual axis y(mm).

Z = Manipulator cartesian coordinate virtual axis z(mm).

$$A_{j4} = A_{j2} - A_{j1} + A$$

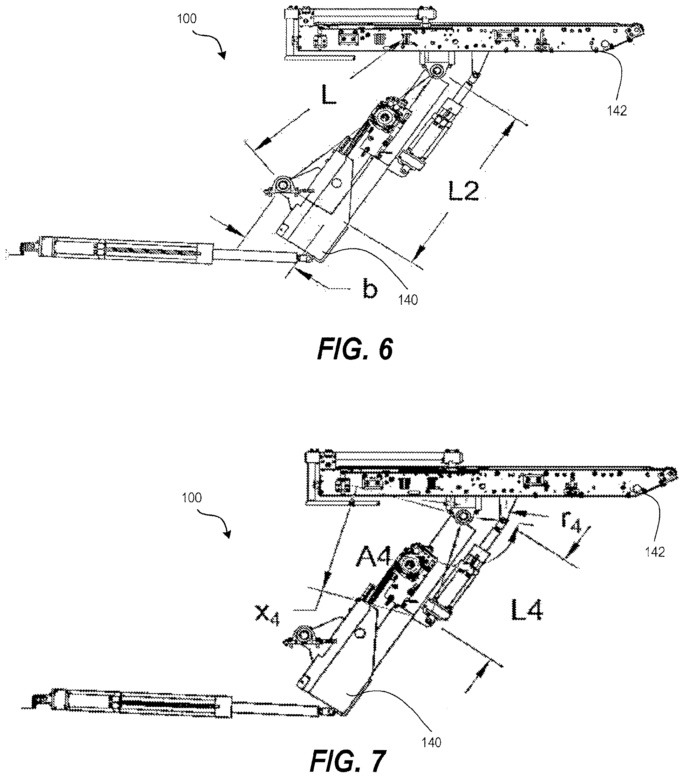

FIGs. 5-8 illustrate that the conveyor Cartesian coordinates and joint positions are calculated as follows for the lift **140** and front portion **142** of the robotic carton unloader **100 (FIG. 1).** A is defined as the angle of the conveyor with respect to the X axis and is the same in both coordinate systems.

The coordinated motion of the conveyor joint axis is accomplished in three steps. First, the coordinated motion is commanded using the MCLM function block and the virtual Cartesian axis. The virtual axis AI, L, and A4 are then commanded using the equations listed below. The result of the equation for A1 is used as the commanded position in a MAM function block controlling the virtual axis AI. The function block is triggered periodically. This causes the position of A1 to "chase" the result of the equation for AI. The same technique is used for L and A4. Lastly, the joint axis L1, L2, and L4 are each controlled with a cam profile function block MACP. AI is the master for L1 and L is the master for L2, and A4 is the master for L4. The cam profiles are derived from the equations below. L3=Y and is the same in both coordinate systems.

Conveyor:

$L_1$ = total length of Axis L1 Linear actuator (mm).
$L_2$ = total length of Axis L2 Linear actuator (mm).
$L_3$ = Actual position of Axis L3 (mm).
$L_4$ = total length of Axis L4 Linear actuator (mm).
$r_1$ = length of the connection between L1 and A1 (mm).
$x_1$ = distance from L1 rear mount to A1 (mm).
$r_4$ = length of the connection between L4 and A4 (mm).
$x_4$ = distance from L4 rear mount to A4 (mm).
b = distance from A1 perpendicular to L2 line of motion (mm).
A = Angle of the conveyor in world frame(Deg).
L = Virtual axis connecting virtual axis A1 and A4 (mm).
$A_1$ = Angle of virtual axis A1 (Deg).
$A_4$ = Angle of virtual axis A4 (Deg).
x = Conveyor cartesian coordinate virtual axis x(mm).
y = Conveyor cartesian coordinate virtual axis y(mm).
z = Conveyor cartesian coordinate virtual axis z(mm).

Joint to Cartesian Transform:

$$A_1 = Cos^{-1}\left(\frac{\left(r_1{}^2 + x_1{}^2 - L_1{}^2\right)}{2r_1x_1}\right)$$

$$A_4 = Cos^{-1}\left(\frac{\left(r_4{}^2 + x_4{}^2 - L_4{}^2\right)}{2r_4x_4}\right)$$

$$x = \sqrt{L_2{}^2 + b^2} \times Cos\left(A_1 - Tan^{-1}\left(\frac{b}{L_2}\right) - 36.1^\circ\right)$$

$$y = L_3$$

$$z = \sqrt{L_2{}^2 + b^2} \times Sin\left(A_1 - Tan^{-1}\left(\frac{b}{L_2}\right) - 36.1^\circ\right)$$

$$A = 180.7^\circ - A_1 - A_4$$

Cartesian to Joint Transform:

$$A_1 = 36.1^\circ + Tan^{-1}\left(\frac{z}{x}\right) + Sin^{-1}\left(\frac{b}{\sqrt{x^2 + z^2}}\right)$$

$$L = \sqrt{x^2 + z^2}$$

$$A_4 = 144.6° - Tan^{-1}\left(\frac{z}{x}\right) - Sin^{-1}\left(\frac{b}{\sqrt{x^2 + z^2}}\right)_1 - A$$

$$L_1 = \sqrt{r_1{}^2 + x_1{}^2 - 2r_1 x_1 Cos(A_1)}$$

$$L_2 = \sqrt{L^2 - b^2}$$

$$L_3 = y$$

$$L_4 = \sqrt{r_4{}^2 + x_4{}^2 - 2r_4 x_4 Cos(A_4)}$$

Commanded Angle for Tool/Conveyor:

$x_c$ = Current x coordinate (mm).
$y_c$ = Current y coordinate (mm).
$z_c$ = Current z coordinate (mm).
$x_s$ = Starting x coordinate (mm).
$y_s$ = Starting y coordinate (mm).
$z_s$ = Starting z coordinate (mm).
$A_s$ = Starting Angle (Deg).
$x_e$ = Ending x coordinate (mm).
$y_e$ = Ending y coordinate (mm).
$z_e$ = Ending z coordinate (mm).
$A_e$ = Ending Angle (Deg).
$A_t$ = Total motion Angle (Deg).
$D_t$ = total point to point move distance (mm).
$D_r$ = current remaining point to point move distance (mm).
$A_c$ = Commanded angle of the tool/conveyor (Deg).
$C$ = Command tollerance (mm).

$$D_t = \sqrt{(x_e - x_s)^2 + (y_e - y_s)^2 + (z_e - z_s)^2}$$

$$D_r = \sqrt{(x_e - x_c)^2 + (y_e - y_c)^2 + (z_e - z_c)^2}$$

$$A_t = A_e - A_s$$

Commanded Angle Fine Point Move:

$$A_c = A_s + A_t\left(1 - \frac{D_r}{D_t}\right)$$

Commanded Angle Single End Blended Move:

$$D_r > C : A_c = A_s + A_t\left(1 - \frac{D_r - C}{D_t - C}\right)$$

$$D_r \leq C : A_c = A_e$$

Commanded Angle Double End Blended Move:

$$D_r > 2C : A_c = A_s + A_t \left(1 - \frac{D_r - 2C}{D_t - 2C}\right)$$

$$D_r \leq 2C : A_c = A_e$$

**Linear Motion Limits based on Joint Motion Limits:**

$(x_s, y_s, z_s, A_s)$ = Cartesian start position of the tool/conveyor (mm).
$(x_e, y_e, z_e, A_e)$ = Cartesian end position of the tool/conveyor (mm).
$(J1_s, J2_s, J3_s, A_s)$ = Joint start position of the tool/conveyor (Deg) or (mm).
$(J1_e, J2_e, J3_e, A_e)$ = Joint end position of the tool/conveyor (Deg) or (mm).
$J_s$ = Start position of the Joint Axis (Deg) or (mm).
$J_e$ = End position of the Joint Axis (Deg) or (mm).
$d_j$ = Move distance of the joint Axis (Deg) or (mm).
$d_l$ = Linear move distance of the tool/conveyor (mm).

$$\alpha_{sp} = Linear\ Acceleration\ Set\ Point\ of\ the\ Tool/Conveyor\ \left(\frac{mm}{S^2}\right)$$

$$v_{sp} = Linear\ Velocity\ Set\ Point\ of\ the\ Tool/Conveyor\ \left(\frac{mm}{S}\right)$$

$t_{sp}$ = Minimum Linear Move Time at $\alpha_{sp}$ (S).

$$\alpha_l = Linear\ Acceleration\ of\ the\ Tool/Conveyor\ \left(\frac{mm}{S^2}\right)$$

$t_l$ = Minimum Linear Move Time at $\alpha_l$ (S).

$$v_{max} = Maximum\ Linear\ Velocity\ of\ the\ Tool/Conveyor\ at\ a_l \left(\frac{mm}{S}\right)$$

$$v_l = Linear\ Velocity\ of\ the\ Tool/Conveyor\ \left(\frac{mm}{S}\right)$$

$$v_{lim} = Velocity\ Limit\ of\ a\ given\ axis\ \left(\frac{mm}{S}\right) or \left(\frac{Deg}{S}\right)$$

$$\alpha_{lim} = Acceleration\ Limit\ of\ a\ given\ axis\ \left(\frac{mm}{S^2}\right) or \left(\frac{Deg}{S^2}\right)$$

$$\alpha_j = Acceleration\ Joint\ Axis \left(\frac{Deg}{S^2}\right) or \left(\frac{mm}{S^2}\right)$$

$$v_j = Velocity\ of\ the\ Joint\ Axis \left(\frac{Deg}{S}\right) or \left(\frac{mm}{S}\right)$$

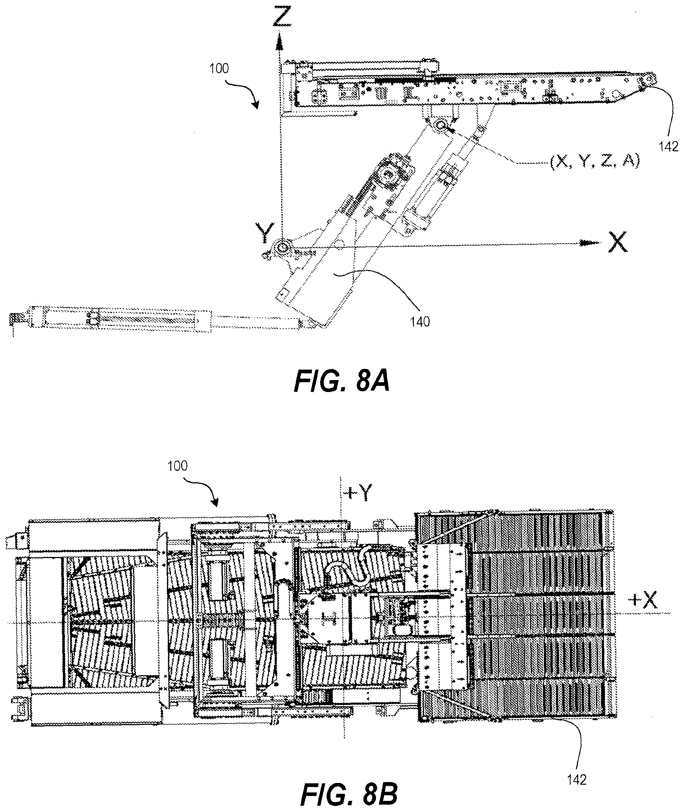

The manipulator joint start and end positions are the result of transforming the calculated start and end positions from Cartesian coordinates (x, y, z, A), to SCARA coordinates (J1, J2, J3, A). The transform calculation is done on the (x, z) and (J1, J2) coordinates using the MCTP function block available in the Logix Designer software. Y = J3, and A is a coordinate common to both systems defined as the angle of the tool/conveyor with respect to the X axis as illustrated in **FIGs. 4** and **8A.**

The conveyor joint start and end positions are as follows:

$$A1: J_s = Tan^{-1}\left(\frac{z_s}{x_s}\right); J_e = Tan^{-1}\left(\frac{z_e}{x_e}\right)$$

$$L: J_s = \sqrt{x_s{}^2 + z_s{}^2}; J_e = \sqrt{x_e{}^2 + z_e{}^2}$$

$$Y: J_s = y_s; \quad J_e = y_e$$

$$A4: J_s = 180.7° - J_{1s} - A_s; \quad J_e = 180.7° - J_{1e} - A_e$$

$$d_l = \sqrt{(x_e - x_s)^2 + (y_e - y_s)^2 + (z_e - z_s)^2}$$

$$d_j = J_e - J_s$$

Calculate the actual linear acceleration based on joint acceleration limits:

$$t_{sp} = \sqrt{\frac{d_l}{a_{sp}}}$$

$$a_j = \frac{d_j}{t_{sp}^2}$$

$$IF: a_j > a_{lim}; \quad a_l = \frac{a_{sp} a_{lim}}{a_j}$$

$$IF: a_j \leq a_{lim}; \quad a_l = a_{sp}$$

Calculate the actual linear velocity based on joint velocity limits:

$$t_l = \sqrt{\frac{d_l}{a_l}}$$

$$v_{max} = a_l t_l$$

$$d_l = \frac{1}{2} v_{max} t_l$$

$$d_j = \frac{1}{2} v_j t_l$$

$$2\frac{d_l}{v_l} = 2\frac{d_j}{v_j}$$

$$v_j = \frac{v_{max} d_j}{d_l}$$

$$IF: v_j > v_{lim}; \; v_l = \frac{v_{max}v_{lim}}{v_j}$$

$$IF: v_j \leq v_{lim}; \; v_l = v_{sp}$$

The collision avoidance is accomplished by monitoring a virtual line segment situated above the conveyor surface. If the manipulator tool violates this line segment from above, all motion is stopped. The constants in the following equations are derived from the physical dimensions of the manipulator head and conveyor system.

Collision Avoidance:

$A_{ct}$ = Current tool angle (Deg).

$x_{ct}$ = Current tool x position in cartesian coordinates (mm).

$z_{ct}$ = Current tool z position in cartesian coordinates (mm).

$x_{tf}$ = Current front of tool x position in cartesian coordinates (mm).

$z_{tf}$ = Current front of tool a position in cartesian coordinates (mm).

$x_{tr}$ = Current rear of tool x position in cartesian coordinates (mm).

$z_{tr}$ = Current rear of tool z position in cartesian coordinates (mm).

$A_{cc}$ = Current conveyor angle (Deg).

$x_{cc}$ = Current conveyor x position in cartesian coordinates (mm).

$z_{cc}$ = Current conveyor z position in cartesian coordinates (mm).

$x_{cf}$ = Current front of conveyor x position in cartesian coordinates (mm).

$z_{cf}$ = Current front of conveyor z position in cartesian coordinates (mm).

$x_{cr}$ = Current rear of conveyor x position in cartesian coordinates (mm).

$z_{cr}$ = Current rear of conveyor z position in cartesian coordinates (mm).

$z_{fl}$ = Current z lower limit in cartesian coordinates for the front of the tool (mm).

$z_{rl}$ = Current z lower limit in cartesian coordinates for the rear of the tool (mm).

$$x_{tf} = x_{tc} + 318Cos(A_{ct} + 19.5°)$$

$$z_{tf} = z_{tc} + 318Sin(A_{ct} + 19.5°)$$

$$x_{tr} = x_{tc} - 613Cos(-A_{ct} + 14.2°)$$

$$z_{tr} = z_{tc} - 613Sin(-A_{ct} + 14.2°)$$

$$x_{cf} = x_{cc} + 1077Cos(-A_{cc} + 21.8°)$$

$$z_{cf} = z_{cc} + 1077 Sin(-A_{cc} + 21.8°)$$

$$x_{cr} = x_{cc} - 894 Cos(A_{cc} + 26.5°)$$

$$z_{cr} = z_{cc} + 894 Sin(A_{cc} + 26.5°)$$

If $x_{ct} < 500$: $z_{fl} = z_{fr} = 480$ (The manipulator tool is above the fixed height unscrambler conveyor.)

If $x_{ct} \geq 500$:

$$z_{fl} = \frac{z_{cf} - z_{cr}}{x_{cf} - x_{cr}}(x_{tf} - 780) + \frac{z_{cf} - z_{cr}}{x_{cf} - x_{cr}}(z_{cr} - x_{cr})$$

$$z_{rl} = \frac{z_{cf} - z_{cr}}{x_{cf} - x_{cr}}(x_{tr} - 780) + \frac{z_{cf} - z_{cr}}{x_{cf} - x_{cr}}(z_{cr} - x_{cr})$$

All motion is stopped if:

$$z_{tf} - z_{fl} < 50; \text{ or } z_{tr} - z_{fr} < 50$$

The vehicle will move down the length of the trailer keeping centered and perpendicular to the trailer. The vehicle has four independently controlled wheels. Each wheel has a steering servo motor and a traction servo motor. The vehicle will move in such a way as to correct for any vehicle yaw (skew) within the trailer or error in side to side clearance during each motion command.

FIG. 8B illustrates that the center of rotation is an arbitrary point in vehicle frame about which the vehicle (robotic carton unloader **100**) will rotate during a yaw correction. This point is variable and can be moved so that the yaw correction can be done while avoiding collisions with obstacles in the vicinity of the vehicle.

R_cp=Distance from the center point of the vehicle rotation to the center point of the wheel rotation (mm).
θ_cp=Angle between the line from the center point of vehicle rotation parallel to the vehicle frame X axis and the line from the vehicle center point of rotation to the center point of the wheel rotation (Deg).
D_t=total travel distance of the commanded vehicle motion (mm).
α=Yaw correction of the commanded vehicle motion (Deg).
V=Speed of the commanded vehicle motion (mm/S)
A=Angle of the commanded vehicle motion (Deg).
θ_n=Commanded wheel steering angle in vehicle frame at travel distance (D_t n/1000 (Deg).
X_n=The x coordinate of the wheel position in world frame at distance (D_t n)/1000 (mm).
Y_n=The y coordinate of the wheel position in world frame at distance (D_t n)1000 (mm).
D_n=The total travel distance of the wheel at distance (D_t n)/1000 (mm).
D=The distance traveled from D_(n-1) to D_n (mm).

The cam profiles for vehicle motion are set to 1001 elements (0-1000). In the equations below, n is the element number in the cam profile. For n=0 to 1000, the angle of the steering motor during the motion of the vehicle from distance 0 to D_t for any given wheel is as follows:

$$V\_x = V Sin(A) + ((\alpha V R\_cp)/D\_t) Sin(\pi/2 + \theta\_cp + \alpha n/1000)$$

$$V\_y = V Cos(A) + ((\alpha V R\_cp)/D\_t) Cos(\pi/2 + \theta\_cp + \alpha n/1000)$$

$$\theta\_n = [Tan]^{(-1)} (V\_x/V\_y) - \alpha n/1000$$

The distance travelled by any given wheel during the motion of the vehicle from 0 to D_t is as follows:

$$X\_n = R\_cp \ Cos(\theta\_cp + \alpha n/1000) + ((nD\_t/1000)Cos(A)$$

$$Y\_n = R\_cp \ Sin(\theta\_cp + \alpha n/1000) + ((nD\_t/1000)Sin(A)$$

If n=0:

$$D\_n = 0$$

If n > 0:

$$D \cong \sqrt{(2\&(X\_n - X\_(n-1))^2 + (Y\_n - Y\_(n-1))^2}$$

$$D\_n \cong D + D\_(n-1)$$

D is a linear approximation of the arc traveled by the wheel from D_(n-1) to D_n. As the number of steps is increased, the approximation is more accurate. For the purposes of controlling the motion of the vehicle, 1000 steps are sufficiently accurate.

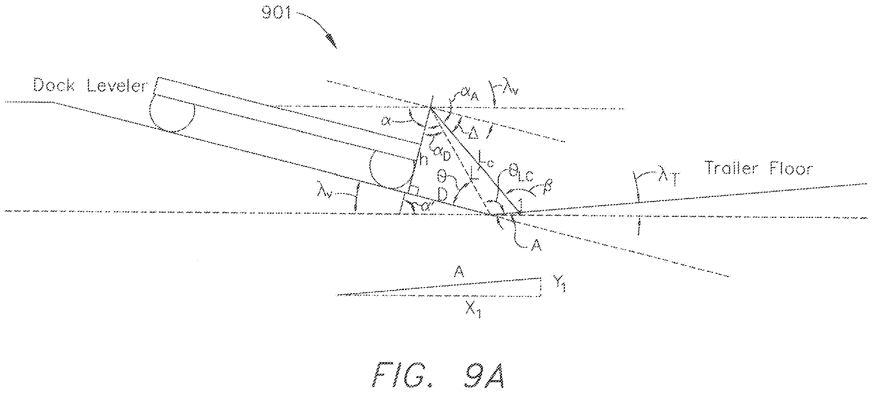

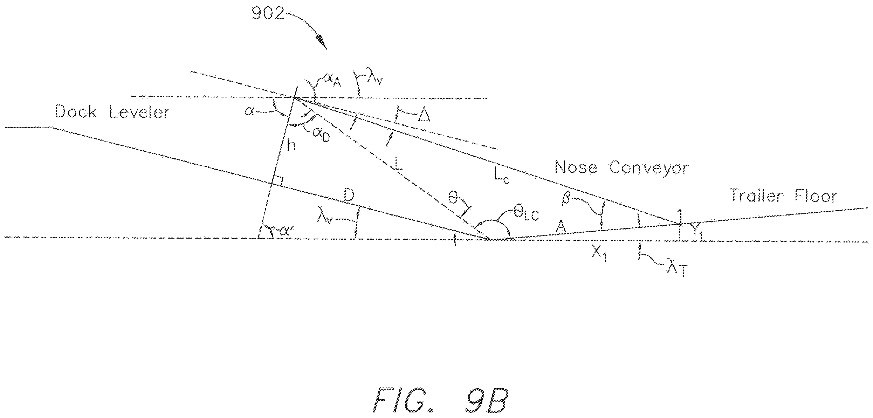

**FIGs. 9A** - **9H** illustrate graphs **901- 908** respectively for refining the relative angle of the "nose conveyor" of the lift **140** and front portion **142** of the robotic carton unloader **100** (**FIG. 1**) when presented with relative differences in pitch encountered in an underlying dock leveler and trailer/shipping container floor. With reference to **FIG. 9A,** the angle Δ represents the angle relative to the vehicle that the nose conveyor will tilt down in order to touch the floor. Point 1 represents the point where the end of the nose conveyor touches the floor. The objective is to derive a formula for determining the angle Δ. Known values in graph **901** include:

h = Height of conveyor pivot point;

Lc = Length of nose conveyor;

λV = Angle of vehicle: As measured by Inclinometer mounted on the vehicle. This value will be in reference to level;

λT = Angle of trailer floor; and

D = Distance remaining on leveler from the conveyor pivot point to the end of the leveler. When the unloader is moving off of the leveler, into the trailer; the conveyor pivot point will be ahead of the end of the leveler, resulting in a negative value for D.

Derivation for Value D Greater than or equal to zero:

Coordinate values $X_1$ and $Y_1$

$$X_1 = A \cos \lambda_T \qquad (1)$$

$$Y_1 = A \sin \lambda_T \qquad (2)$$

Find hypotenuse L' formed by right triangle from known values h and D.

$$L' = \sqrt[2]{h^2 + D^2} \qquad (3)$$

Find angle $\theta$

$$\theta = \tan^{-1}\left(\frac{h}{D}\right) \qquad (4)$$

Find angle $\alpha_D$

$$\alpha_D = 90 - \theta \qquad (5)$$

Substituting (4) into (5)

$$\alpha_D = 90 - \tan^{-1}\left(\frac{h}{D}\right) \qquad (6)$$

**Find angle $\alpha'$**

$$\alpha' = 180 - 90 - \lambda_V \qquad (7)$$

$$\alpha' = 90 - \lambda_V \qquad (8)$$

Find angle $\theta_{LC}$

$$\theta_{LC} = 180 - \lambda_T - \lambda_V - \theta \qquad (9)$$

$$\theta_{LC} = 180 - \lambda_T - \lambda_V - \tan^{-1}\left(\frac{h}{D}\right) \qquad (10)$$

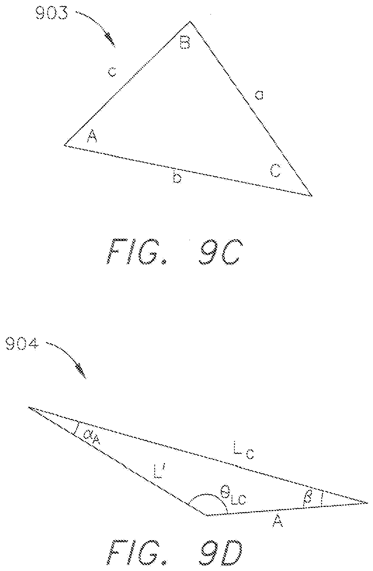

Use the law of Sines to find A as depicted in graph **903** in **FIG. 9C.** Given triangle, ABC:

$$\frac{a}{\sin A} = \frac{b}{\sin B} = \frac{c}{\sin C} \qquad (11)$$

**FIG. 9D** illustrates a graph **904** for solving for A using triangle L'LcA from the model and the law of Sines.

$$\frac{L_C}{\sin \theta_{LC}} = \frac{L'}{\sin \beta} = \frac{A}{\sin \alpha_A} \qquad (12)$$

Substitute equation (3) into equation (12):

$$\frac{L_C}{\sin \theta_{LC}} = \frac{\sqrt[2]{h^2 + D^2}}{\sin \beta} \qquad (13)$$

Solve for angle $\beta$:

$$\sin \beta = \frac{\sin \theta_{LC} \sqrt[2]{h^2 + D^2}}{L_C} \qquad (14)$$

$$\beta = \sin^{-1}\left(\frac{\sin\theta_{LC}\sqrt[2]{h^2+D^2}}{L_C}\right) \qquad (15)$$

Solve for angle au:

$$\alpha_A = 180 - \theta_{LC} - \beta \qquad (16)$$

Substitute equation (16) into equation (12) and solve for A.

$$\frac{L_C}{\sin\theta_{LC}} = \frac{A}{\sin(180-\theta_{LC}-\beta)} \qquad (17)$$

$$A = \frac{L_C \sin(180-\theta_{LC}-\beta)}{\sin\theta_{LC}} \qquad (18)$$

where

$$\theta_{LC} = 180 - \lambda_T - \lambda_V - \theta$$

and

$$\beta = \sin^{-1}\left(\frac{\sin\theta_{LC}\sqrt[2]{h^2+D^2}}{L_C}\right) \qquad (19)$$

Solve for angle $\Delta$

$$\Delta = 180 - \alpha' - \alpha_D - \alpha_A \qquad (20)$$

Substituting equations (8), (6), and (16) yields

$$\Delta = 180 - (90 - \lambda_V) - \left(90 - \tan^{-1}\left(\frac{h}{D}\right)\right) - (180 - \theta_{LC} - \beta) \qquad (21)$$

$$\Delta = -180 + \lambda_V + \tan^{-1}\left(\frac{h}{D}\right) + \theta_{LC} + \beta \qquad (22)$$

Substitute for $\theta_{LC}$ (10) and reduce the equation:

$$\Delta = -180 + \lambda_V + \tan^{-1}\left(\frac{h}{D}\right) + \left(180 - \lambda_T - \lambda_V - \tan^{-1}\left(\frac{h}{D}\right)\right) + \beta \qquad (23)$$

$$\Delta = -180 + \lambda_V + \tan^{-1}\left(\frac{h}{D}\right) + 180 - \lambda_T - \lambda_V - \tan^{-1}\left(\frac{h}{D}\right) + \beta \qquad (24)$$

$$\Delta = -\lambda_T + \beta \qquad (25)$$

Substitute for β (15) and θ$_{LC}$ (16)

$$\Delta = -\lambda_T + \sin^{-1}\left(\frac{\sin\left(180 - \lambda_T - \lambda_V - \tan^{-1}\left(\frac{h}{D}\right)\right)\sqrt[2]{h^2 + D^2}}{L_C}\right) \quad (26)$$

Therefore, Point 1 ($X_1$, $Y_1$): From (1), (2), (18), and (19)

$$X_1 = \left[\frac{L_C \sin(180 - \theta_{LC} - \beta)}{\sin\theta_{LC}}\right]\cos\lambda_T \quad (27)$$

$$Y_1 = \left[\frac{L_C \sin(180 - \theta_{LC} - \beta)}{\sin\theta_{LC}}\right]\sin\lambda_T \quad (28)$$

where

$$\theta_{LC} = 180 - \lambda_T - \lambda_V - \theta$$

and

$$\beta = \sin^{-1}\left(\frac{\sin\theta_{LC}\sqrt[2]{h^2 + D^2}}{L_C}\right) \quad (29)$$

Angle Δ: From (26)

$$\Delta = -\lambda_T + \sin^{-1}\left(\frac{\sin\left(180 - \lambda_T - \lambda_V - \tan^{-1}\left(\frac{h}{D}\right)\right)\sqrt[2]{h^2 + D^2}}{L_C}\right) \quad (30)$$

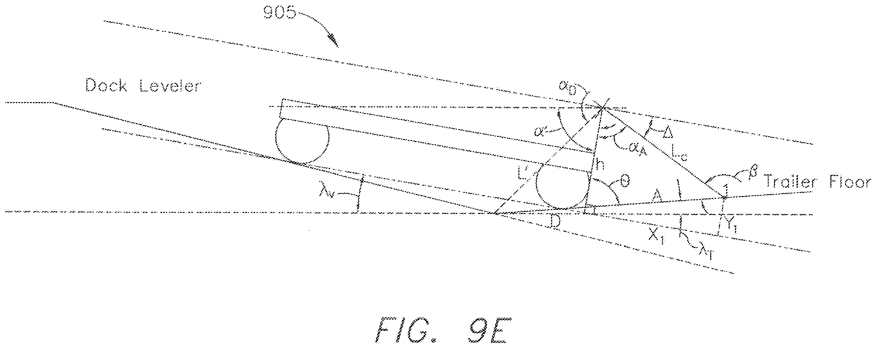

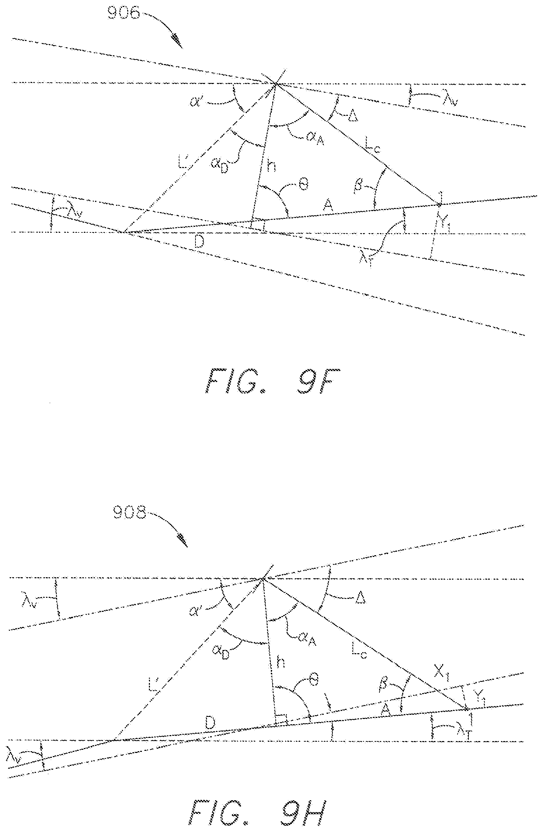

**FIGs. 9E** - **9F** illustrates graphs **905** - **906** for Value D less than zero, Vehicle angle negative: Derivation -- From **FIG. 9F:**

$$\Delta = 90 - \alpha_A \quad (31)$$

$$\alpha_A = 180 - \theta - \beta \quad (32)$$

$$\theta = 90 - \lambda_T - |\lambda_V| \quad (33)$$

Use the law of Sines to find β:

$$\frac{h}{\sin\beta} = \frac{A}{\sin\alpha_A} = \frac{L_C}{\sin\theta} \quad (34)$$

**Solve for** β

$$h\sin\theta = L_C\sin\beta \quad (35)$$

$$\sin \beta = \frac{h \sin \theta}{L_c} \tag{36}$$

$$\beta = \sin^{-1}\left[\frac{h\sin(90-\lambda_T-|\lambda_V|)}{L_c}\right] \tag{37}$$

Therefore

$$\Delta = 90 - \alpha_A \tag{38}$$

**Where**

$$\alpha_A = 180 - \theta - \beta \tag{39}$$

$$\theta = 90 - \lambda_T - \lambda_V \tag{40}$$

$$\beta = \sin^{-1}\left[\frac{h\sin(90-\lambda_T-|\lambda_V|)}{L_c}\right] \tag{41}$$

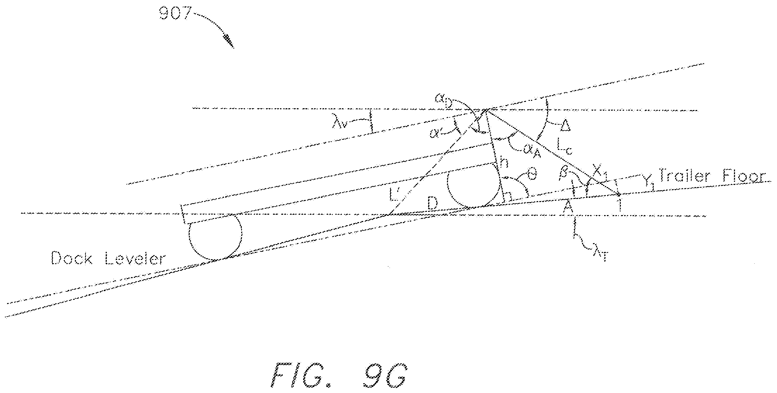

**FIGs. 9G** - **9H** illustrates graphs **907** - **908** for Value D less than zero, Vehicle angle positive: Derivation -- From **FIG. 9H:**

$$\gamma = \lambda_V - \lambda_T \tag{42}$$

$$\theta = 90 + \gamma \tag{43}$$

$$\theta = 90 + \lambda_V - \lambda_T \tag{44}$$

Use the law of Sines to find β:

$$\frac{h}{\sin \beta} = \frac{A}{\sin \alpha_A} = \frac{L_c}{\sin \theta} \tag{45}$$

$$\sin \beta = \frac{h\sin\theta}{L_c} \tag{46}$$

$$\beta = \sin^{-1}\left[\frac{h\sin(\theta)}{L_c}\right] \tag{47}$$

Find $\alpha_A$

$$\alpha_A = 180 - \beta - \theta \tag{48}$$

Finally find $\Delta$

$$\Delta = 90 - \alpha_A \qquad (49)$$

Therefore

$$\Delta = 90 - \alpha_A \qquad (50)$$

Where

$$\alpha_A = 180 - \beta - \theta \qquad (51)$$

$$\beta = \sin^{-1}\left[\frac{h\sin(\theta)}{l_E}\right] \qquad (52)$$

And

$$\theta = 90 + \lambda_V - \lambda_T \qquad (53)$$

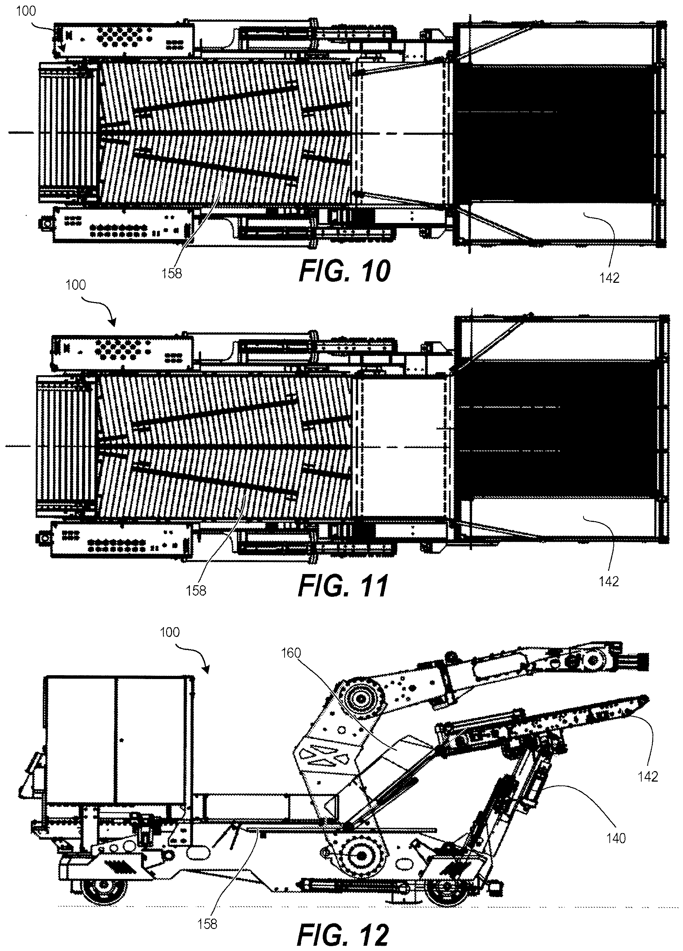

In one or more embodiments, **FIGs. 10 -11** illustrate that the front portion **142** of the conveyor system **100** can be laterally positionable to mirror lateral positioning of the manipulator head **136** (**FIG. 2**). **FIG. 10** illustrates the front portion **142** centered. **FIG. 11** illustrates the front portion **142** laterally translated to one side.

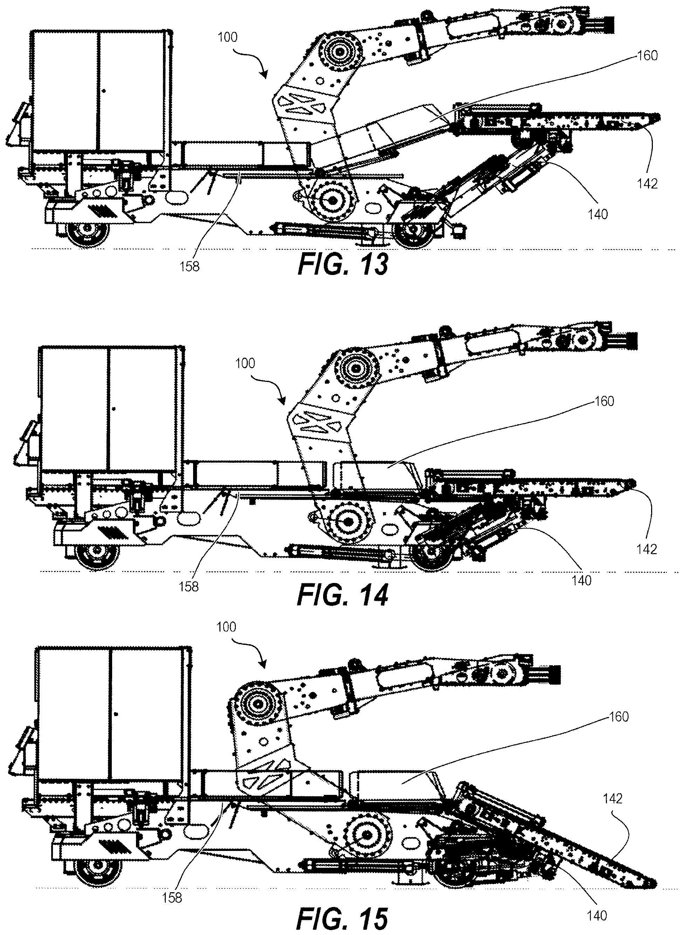

**FIGs. 12 - 15** illustrate the robotic carton unloader **100** including an expandable transition belt **160** that maintains a conveying path between the front portion **142** and the rear portion **158** of the conveying system **110**. The ability to convey cartons is retained when the lift **140** is raised to a fully-up position (**FIG. 12**), a mid-position (**FIG. 13**), when the lift **140** is retracted and level (**FIG. 14**), and when the front portion **142** is rotated downward (**FIG. 15**). The transition belt **160** can be configured adjust its length such that even at a highest point of the lift **140** that the cartons can be conveyed without tumbling.

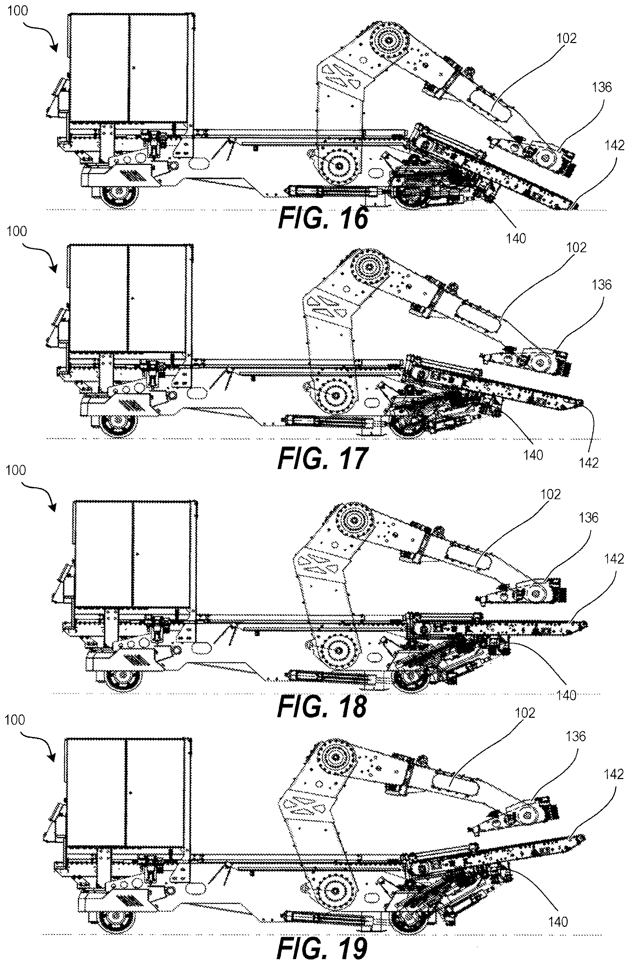

**FIGs. 16 -19** illustrate that the and the lift **140** can raise and tilt the forward portion of the conveyor system **110** of the robotic carton unloader **100** to shadow the positioning of the manipulator head **136** by the robotic arm assembly **102**. Thereby, a carton **104** (**FIG. 1**) can be gently dragged from a carton pile **106** (**FIG. 1**) to the conveyor system **110** without dropping any significant distance. The manipulator head **136** need not engage more than a rear face of a carton. In addition, the design weight of what should be distally supported by the robotic arm assembly **102** can be reduced. **FIG. 16** illustrates the front portion **142** full retracted and tipped to ground level to receive a carton drawn upward from a bottom row of the carton pile (not shown). **FIG. 17** illustrates the front portion **142** full retracted but only partially tipped to receive from a low but not bottom row of the carton pile. **FIG. 18** illustrates the front portion **142** full retracted but level to receive a slightly higher row. **FIG. 19** illustrates the front portion **142** full retracted but tipped upwardly to receive from yet a higher row. It should be appreciated that higher positions can be reached by extending the lift **140**.

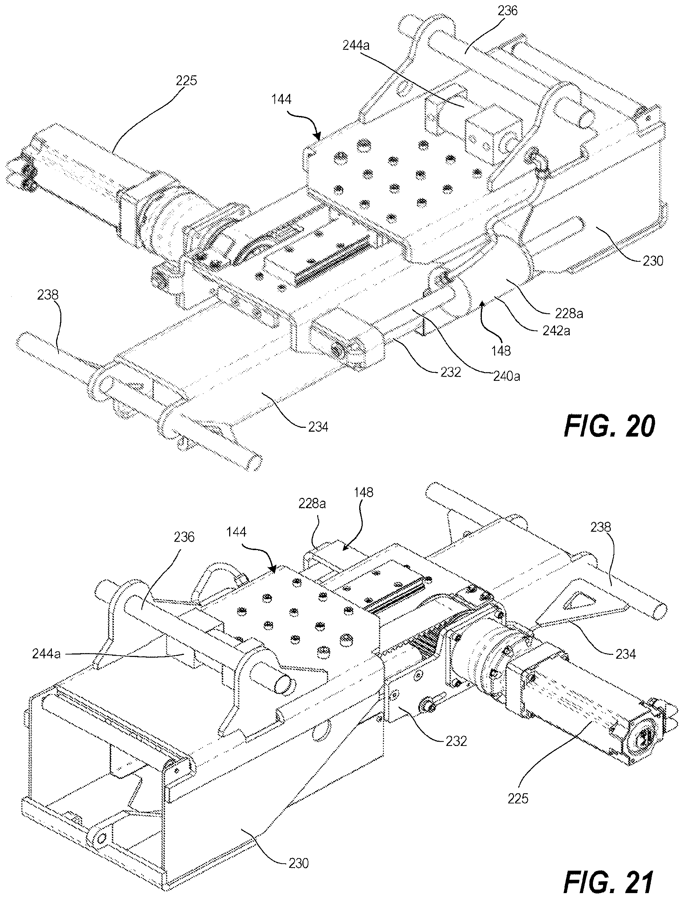

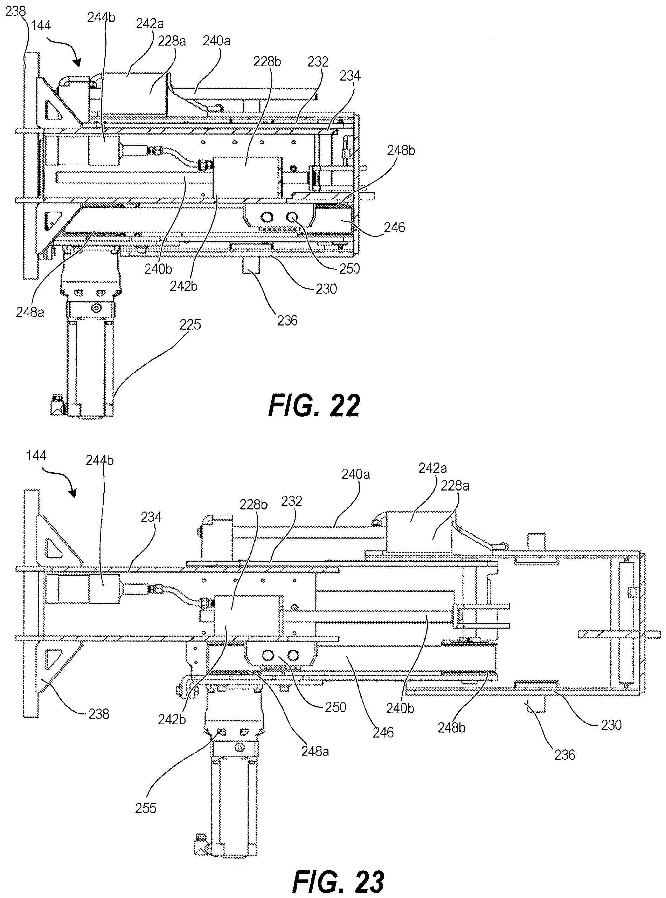

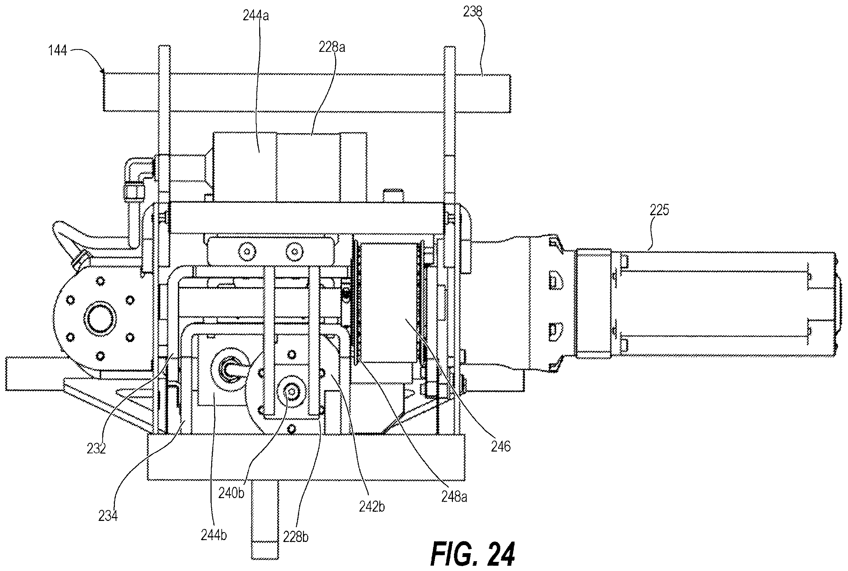

**FIGs. 20 - 24** illustrate the telescoping beam **144** having a locking boom mechanism **148** that includes two linear gripping devices **228a, 228b** (**FIGs. 22 - 23**) which each apply a normal force to develop a frictional holding force upon an object or surface which is not permanently fixed. In an exemplary embodiment, the telescoping beam **144** has a first stage **230,** a second stage **232,** and a third stage **234**. The first stage **230** attaches for pivoting movement to the mobile body **114** (**FIG. 1**) and has a mounting fixture **236** for mounting one end of the nose tilting hydraulic actuator **227** (**FIG. 2**). The second stage **232** includes mounting of the drive belt motor **225**. The third stage **234** includes a pivot yoke **238** to which the front portion **142** of the conveyor system **110** is pivotally mounted. The outer linear gripping device **228a** has an upwardly extended locking rod **240a** that is attached to move with the second stage **232** and received for sliding movement within a rod lock **242a** attached to the first stage **230**. The inner linear gripping device **228b** (**FIGs. 22 - 23**) has a downwardly extended locking rod **240b** that is also attached to move with the second stage **232** and received for sliding movement within a rod lock **242b** attached to the third stage 230. The gripping force within each rod lock **242a- 242b** is normally applied by a mechanical spring (not shown) and only released when movement is required. The force is may be released by fluid pressure, mechanical means, or electromotive device. To generate higher fluid pressures a self-contained and closed pressure booster cylinders **244a** - **244b** (**FIG. 24**) is used for first and third stages **230, 234**. The booster cylinder converts line pressure compressed air energy to incompressible hydraulic fluid energy allowing for higher clamping forces in a compact gripping device by the use of stiffer springs. Using a pressure booster in this application is ideal since the fluid reciprocates in the system and does not flow. A finite volume of hydraulic fluid reciprocates and the booster is sized to have additional capacity. A drive belt **246** received on upper and lower pulleys **248a** - **248b** in the second stage **232** is driven by the drive belt motor 225. Mounting blocks 250 (FIGs. 22 -23) are attached respectively to the first and third stages **230, 234** and are mounted to opposite sides of the drive belt **246** to create relative movement either toward each other or away from other depending on the direction of rotation.

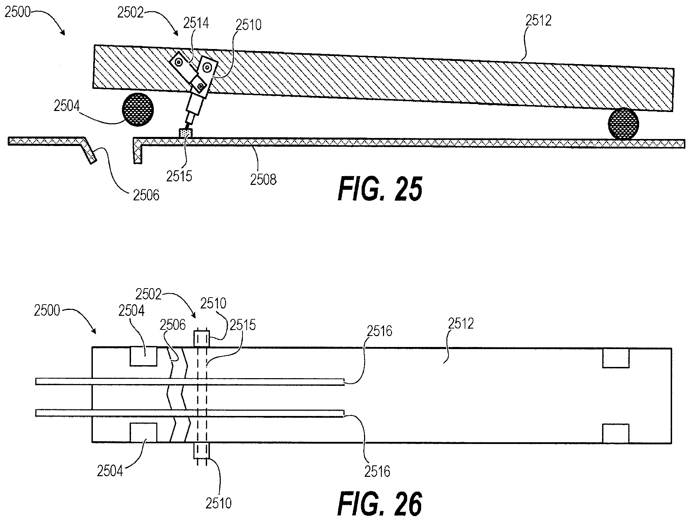

**FIGs. 25** - **26** illustrates a mobile carton unloader **2500** having a built-in jacking apparatus **2502** that can raise a wheel **2504** out of a damaged section **2506** of a floor **2508** to enable extraction of the mobile carton unloader **2500**. A telescoping jack **2510** of the built-in jacking apparatus **2502** is pivotally attached to a mobile body **2512** of the mobile carton unloader **2500**. A second actuator **2514** is pivotally attached to the mobile body **2512** and to the telescoping jack **2510** to impart a longitudinal movement to the mobile body **2512** once the telescoping jack **2510** raises the wheel **2504** out of the damaged section **2506**. FIG. **26** illustrates that the telescoping jack apparatus **2502** can have telescoping jacks **2510** mounted on opposite lateral sides of the mobile body **2512** and that a foot **2515** can be square tube stock laterally connected across the lower ends of both telescoping jacks **2510**. Before extending the built-in jacking apparatus **2502**, longitudinally placed supports **2516** can be placed over the damaged section **2506** to enable the built-in jacking apparatus **2502** to walk across the damaged section **2506**. Alternatively, the mobile body **2512** can be pulled across.

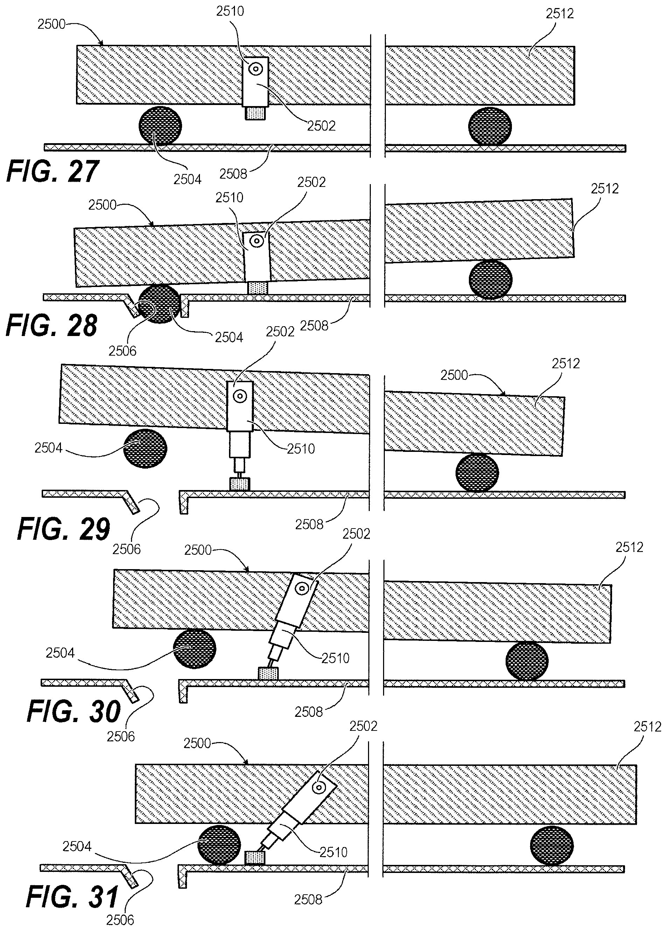

**FIGs. 27** - **31** illustrate the built-in jacking apparatus **2502** being used to reposition the mobile carton unloader **2500**. FIG. **27** illustrates the mobile carton unloader **2500** in a nominal state with the built-in jacking apparatus **2502** retracted and the mobile body **2512** supported on the floor **2508** by wheels **2504**. FIG. **28** illustrates a wheel **2504** falling through the floor **2508,** preventing normal movement of the mobile carton unloader **2500**. FIG. **29** illustrates the telescoping jack **2510** being extended to raise the wheel **2504** out of the damaged section **2506** of the floor **2508**. FIG. **30** illustrates the mobile body **2512** being longitudinally moved away from the damaged section **2506,** still supported by a canted telescoping jack **2510**. FIG. **31** illustrates additional longitudinal movement of the mobile body **2512** that causes further canting of the telescoping jack **2510** and corresponding lowering of the mobile body **2512** until supported by the wheel **2504**.

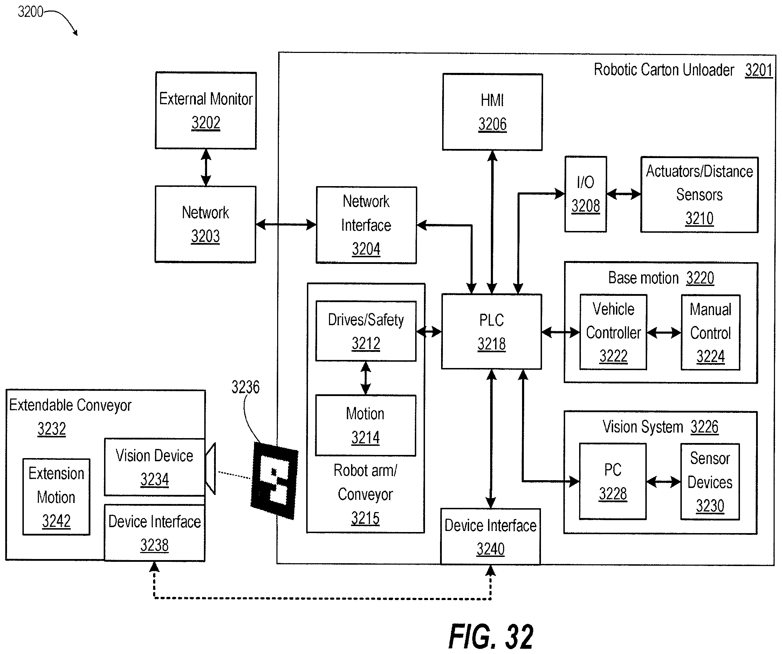

FIG. **32** illustrates exemplary components of a robotic carton unloader **3201** suitable for use in various embodiments. The robotic carton unloader **3201** may include an external monitor **3202,** a network interface module **3204,** an HMI module **3206,** an input/output module (I/O module **3208**), an actuators/distance sensors module **3210,** a robotic arm and a conveyor system **3215** that includes a drives/safety module **3212** and a motion module **3214,** a programmable logic controller (or PLC **3218**), a base motion module **3220** that includes a vehicle controller module **3222** and a manual control module **3224,** and a vision system **3226** (or visualization system) that may include one or more computing devices **3228** (or "PCs") and sensor devices **3230**. In some embodiments, vision system **3226** of the robotic carton unloader **3201** may include a PC **3228** connected to each sensor device **3230**. In embodiments in which more than one sensor device **3230** is present on the robotic carton unloader **3201,** the PCs **3228** for each sensor device **3230** may be networked together and one of the PC's **3228** may operate as a master PC **3228** receiving data from the other connected PC's **3228,** may perform data processing on the received data and its own data (e.g., coordinate transformation, duplicate elimination, error checking, etc.), and may output the combined and processed data from all the PCs **3228** to the PLC **3218**. In some embodiments, the network Interface module **3204** may not have a PLC inline between it and the PC **3228,** and the PLC **3218** may serve as the Vehicle Controller and/or Drives/Safety system.

The robotic carton unloader **3201** may connect to remote locations or systems with a network interface module **3204** (e.g., a Wi-Fi™ radio, etc.) via a network **3203,** such as a local area Wi-Fi™ network. In particular, the network interface module **3204** may enable the robotic carton unloader **3201** to connect to an external monitor **3202**. The external monitor **3202** may be anyone of a remote warehouse or distribution center control room, a handheld controller, or a computer, and may provide passive remote viewing through the vision system **3226** of the robotic carton unloader **3201**. Alternately, the external monitor **3202** may override the programming inherent in the vision system **3226** and assume active command and control of the robotic carton unloader **3201**. Programming for the robotic carton unloader **3201** may also be communicated, operated and debugged through external systems, such as the external monitor **3202**. Examples of an external monitor **3202** that assumes command and control may include a remotely located human operator or a remote system, such as a warehouse or distribution server system (i.e., remote device as described above). Exemplary embodiments of using an external monitor **3202** to assume command and control of the robotic carton unloader **3201** may include human or computer intervention in moving the robotic carton unloader **3201,** such as from one unloading bay to another, or having the external monitor **3202** assume control of the robotic arm to remove an item (e.g., box, carton, etc.) that is difficult to unload with autonomous routines. The external monitor **3202** may include any of a visual monitor, a keyboard, a joystick, an I/O port, a CD reader, a computer, a server, a handheld programming device, or any other device that may be used to perform any part of the above described embodiments.

The robotic carton unloader **3201** may include a human machine interface module **3206** (or HMI module **3206**) that may be used to control and/or receive output information for the robot arm and conveyor system **3215** and/or the base motion module **3220**. The HMI module **3206** may be used to control (or may itself include) a joystick, a display, and a keypad that may be used for re-programming, over-riding the autonomous control of the machine, and driving the robotic carton unloader **3201** from point to point. The actuators **3210** that may be actuated individually or in any combination by the vision system **3226,** and the distance sensors may be used to assist in guiding the robotic carton unloader **3201** into an unloaded area (e.g., a trailer). The I/O module **3208** may connect the actuators and distance sensors **3210** to the PLC **3218.** The robotic arm and conveyor system **3215** may include all components needed to move the arm and/or the conveyor, such as drives/engines and motion protocols or controls. The base motion module **3220** may be the components for moving the entirety of the robotic carton unloader **3201.** In other words, the base motion module **3220** may be the components needed to steer the vehicle into and out of unloading areas.

The PLC **3218** that may control the overall electromechanical movements of the robotic carton unloader **3201** or control exemplary functions, such as controlling the robotic arm or a conveyor system **3215.** For example, the PLC **3218** may move the manipulator head of the robotic arm into position for obtaining items (e.g., boxes, cartons, etc.) from a wall of items. As another example, the PLC **3218** may control the activation, speed, and direction of rotation of kick rollers, and/or various adjustments of a support mechanism configured to move a front-end shelf conveyor (e.g., front-end shelf conveyor **6412**). The PLC **3218** and other electronic elements of the vision system **3226** may mount in an electronics box (not shown) located under a conveyor, adjacent to a conveyor, or elsewhere on the robotic carton unloader **3201.** The PLC **3218** may operate all or part of the robotic carton unloader **3201** autonomously and may receive positional information from the distance sensors **3210.** The I/O module **3208** may connect the actuators and the distance sensors **3210** to the PLC **3218.**

The robotic carton unloader **3201** may include a vision system **3226** that comprises sensor devices **3230** (e.g., cameras, microphones, 3D sensors, etc.) and one or more computing device **3228** (referred to as a personal computer or "PC" **3228).** The robotic carton unloader **3201** may use the sensor devices **3230** and the one or more PC **3228** of the vision system **3226** to scan in front of the robotic carton unloader **3201** in real time or near real time. The forward scanning may be triggered by the PLC **3218** in response to determining the robotic carton unloader **3201,** such as a trigger sent in response to the robotic carton unloader **3201** being in position to begin detecting cartons in an unloading area. The forward scanning capabilities may be used for collision avoidance, sent to the human shape recognition (safety), sizing unloaded area (e.g., the truck or trailer), and for scanning the floor of the unloaded area for loose items (e.g., cartons, boxes, etc.). The 3D capabilities of the vision system **3226** may also provide depth perception, edge recognition, and may create a 3D image of a wall of items (or carton pile). The vision system **3226** may operate alone or in concert with the PLC **3218** to recognize edges, shapes, and the near/far distances of articles in front of the robotic carton unloader **3201.** For example the edges and distances of each separate carton in the wall of items may be measured and calculated relative to the robotic carton unloader **3201,** and vision system **3226** may operate alone or in concert with the PLC **3218** to may select specific cartons for removal.

In some embodiments, the vision system **3226** may provide the PLC with information such as: specific XYZ coordinate locations of cartons targeted for removal from the unloading area, and one or more movement paths for the robotic arm or the mobile body of the robotic carton unloader **3201** to travel. The PLC **3218** and the vision system **3226** may work independently or together such as an iterative move and visual check process for carton visualization, initial homing, and motion accuracy checks. The same process may be used during vehicle movement, or during carton removal as an accuracy check. Alternatively, the PLC **3218** may use the move and visualize process as a check to see whether one or more cartons have fallen from the carton pile or repositioned since the last visual check. While various computing devices and/or processors in **FIG. 32,** such as the PLC **3218,** vehicle controller **3222,** and PC **3228,** have been described separately, in the various embodiments discussed in relation to **FIG. 32** and all the other embodiments described herein, the described computing devices and/or processors may be combined and the operations described herein performed by separate computing devices and/or processors may be performed by less computing devices and/or processors, such as a single computing device or processor with different modules performing the operations described herein. As examples, different processors combined on a single circuit board may perform the operations described herein attributed to different computing devices and/or processors, a single processor running multiple threads/modules may perform operations described herein attributed to different computing devices and/or processors, etc.

An extendable conveyor system **3232** can convey articles from the robotic carton unloader **3201** to other portions of a material handling system **3200.** As the robotic carton unloader **3201** advances or retreats, a vision device **3234** on one or the extendable conveyor **3232** and robotic carton unloader **3201** can image a target **3236** on the other. Vision system **3226** can perform image processing to detect changes in size, orientation and location of the target **3236** within the field of view of the vision device **3236.** Device interfaces **3238, 3240** respectively of the extendable conveyor system **3232** and the robotic carton unloader **3201** can convey vision information or movement commands. For example, PLC **3218** can command an extension motion actuator **3242** on the extendable conveyor **3232** to correspond to movements of the robotic carton unloader **3201** to keep the extendable conveyor system **3232** and the robotic carton unloader **3201** in alignment and in proper spacing. In one embodiment, the device interfaces **3238, 3240** utilize a short range wireless communication protocol such as a Personal Access Network (PAN) protocol. Examples of PAN protocols which may be used in the various embodiments include Bluetooth®, IEEE 802.15.4, and Zigbee® wireless communication protocols and standards.

In a proof of concept test, a POINTGREY camera was used to track a black and white Augmented Reality (AR)-tag target that is similar to a Quick Response (QR) code. The dimensions of the target used were 75mm × 75mm and the working distance from the camera to the tag varied from 0.4m to lm. a 2.3 MP GigE POE Blackfly (Sony 1MX136) (Part Number: BFLY-PGE-23S2C-CS) RGB (Red-Green-Blue) camera was used for the study. The camera supported the Robot Operating System (ROS). Optics used was Edmund 5mm FL Wide Angle Low Distortion Lens (Part Number: 68-670). The distance from the camera to the target on extendable vary from 500 mm -750 mm. To assure for maximum visibility of target, with the current set up, a horizontal FOV of 52o was required. As a result, a lens with FOV of 57° (horizontal) * 37° (vertical) was chosen. Software rqt_plot from ROS.org was used to rqt_plot provide a graphical user interface (GUI) plugin for visualizing numeric values in a 2D plot using different plotting backends. ROS console showed AR-tracking and respective variations in x, y, z values in the plot. RGB image topic was provided as input to the AR-tag tracking system and ROS topic's "/pose_x" "/pose_y" "'pose_z" provided x, y, z locations of the AR-tag published frequency of 5Hz.

For implementation in the robotic carton unloader, resultant x, y, z values can be sent to PLC. In this process, these topics are sent to the respective rosnode ("PLC_COMMAND") which are routed the message to PLC. Interfacing requirements/document to the PLC include (i) Data formatting (XYZ), (ii) Error handling/heartbeat messaging, and (iii) Handshaking. Options contemplated for hardware include different options for PC: (a) using an additional personal computer (PC) with no graphic card; (b) an embedded PC; or (c) smart camera. For POINTGREY camera, a 1 GB switch having three ports can be used respectively for the camera, PC and PLC.

The tag recognition analysis showed that this setup provides effective distance and orientation information sufficient for the PLC to maintain alignment between the extendable conveyor and the robotic carton unloader. Dynamic tracking test was conducted using RVIS* to simulate the AR-tag from which a coordinate value was obtained. For (1), frame names "ar_marker_9" were seen in the RVIS. The visual camera image moved simultaneously with the plotted coordinate. For (2), the x, y, z value was plotted against physically measured distances as shown in TABLE 1:

**TABLE 1**

| Real Distance(mm) | 213 | 306 | 405 | 519 | 654 | 792 | 908 | 1143 | 1301 | 1508 |
|---|---|---|---|---|---|---|---|---|---|---|
| Calculated Distance (mm) | 213.9 | 307.5 | 406.7 | 521 | 654.1 | 792.8 | 909.6 | 1147 | 1309.3 | 1525 |
| Error(mm) | -0.9 | -1.5 | -1.7 | -2 | -0,1 | -0.8 | -1.6 | -4 | -8.3 | -17 |

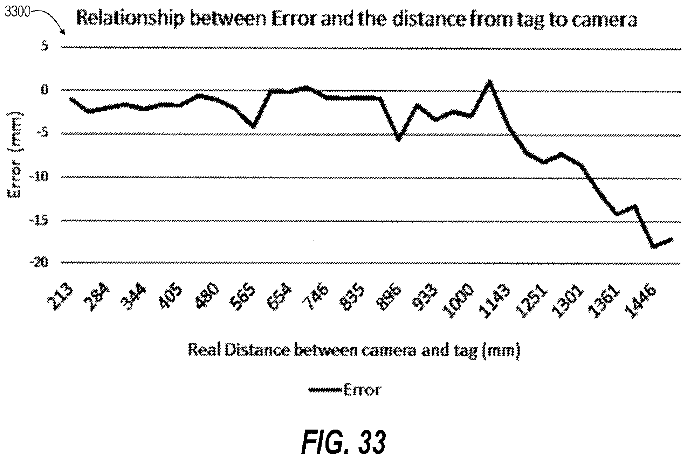

FIG. 33 illustrates a plot 3300 that illustrates the relationship between error and the distance from the tag to the camera. From review of the TABLE 1 and FIG. 33, indication is that (1)generally the error grows with increase in distance; and (2) when the distance is less than 1.1m, the error is steady and less than 5mm. When the distance is more than 1.1m, the error increase rapidly. Implementation for the robotic carton unloader is contemplated with 0.5 to 0.75 m spacing, which would be supported by this approach.

For clarity, the robotic carton unloader 100 (FIG. 1) is described herein as unloading cartons, which can be corrugated boxes, wooden crates, polymer or resin totes, storage containers, etc. The manipulator head can further engage articles that are products that are shrink-wrapped together or a unitary product. In one or more embodiments, aspects of the present innovation can be extended to other types of manipulator heads that are particularly suited to certain types of containers or products. The manipulator head can employ mechanical gripping devices, electrostatic adhesive surfaces, electromagnetic attraction, etc. Aspects of the present innovation can also be employed on a single conventional articulated arm.

**Claims**

1. A robotic carton unloader (100) for unloading a carton pile (106) resting on a floor (118), comprising:

   a mobile body movable (114) across the floor (118);
   a conveyor system (110) mounted on the mobile body (114) to convey unloaded cartons (104) thereon; and
   a robotic arm assembly (102) comprising:

   right and left lower arms (120) pivotally attached at a lower end (122) respectively to the mobile body (114) on opposing lateral sides of the conveyor system (110) passing there between to rotate about a lower arm axis (124) that is perpendicular to a longitudinal axis (126) of the conveyor system (110);
   an upper arm assembly (128) having a rear end (130) pivotally attached at an upper end (132) respectively of the right and left lower arms (120) to pivotally rotate about an upper arm axis (134) that is perpendicular to the longitudinal axis (126) of the conveyor system (110) and parallel to the lower arm axis (124); and a manipulator head (136) attached to a front end (138) of the upper arm assembly (128), the manipulator head (136) engages at least one carton (104) at a time from a carton pile (106) resting on a floor (118) for movement to the conveyor system (110), wherein

a pivotal movement of the right and left lower arms (120) maintains the upper arm axis (134) at a height that enables the at least one carton (104) to be conveyed by the conveyor system (110) without being impeded by the robotic arm assembly (102); and

the manipulator head (136) comprises at least one vacuum manipulator (206), **characterised in that** the robotic carton unloader (100) further comprises

a pneumatic system (208) to selectively perform a sequence of operations of (i) engaging the at least one carton (104) with suction; (ii) disengaging the at least one carton (104) by removing the suction; and (iii) clearing debris from the at least one vacuum manipulator (206) by directing compressed air through the at least one vacuum manipulator (206).

2. The robotic carton unloader (100) of claim 1, further comprising a lift (140) attached between the mobile body (114) and a front portion (142) of the conveyor system (110), the lift (140) moves the front portion (142) of the conveyor system (110) relative to the floor (118) to reduce spacing underneath the at least one carton (104) during movement from the carton pile (106) to the conveyor system (110).

3. The robotic carton unloader (100) of claim 2, wherein the lift (140) further comprises:

a telescoping beam (144) attached between the mobile body (114) and the front portion (142) of the conveyor system (110);
a drive member (146) of the lift (140) that actuates to extend and retract the telescoping beam (144) and having a failure mode that allows the telescoping beam (144) to retract; and
a locking boom mechanism (148) responsive to the failure mode of the drive member (146) to at least slow a rate of retraction of the telescoping beam (144).

4. The robotic carton unloader (100) of claim 3, wherein:

the drive member (146) comprises a belt drive having the failure mode of a broken belt; and
the locking boom mechanism (148) comprising a stored energy source released by the broken belt to actuate a lock between two blocks of the telescoping beam (144).

5. The robotic carton unloader (100) of claim 2, wherein:

the lift (140) having a telescoping beam (144) that is pivotally attached to the front portion (142) of the conveyor system (110) for rotation about a front axis (150) that is transverse to the longitudinal axis (126) of the conveyor system (110) and parallel to the lower and upper arm axes (124,134);
a drive member (146) of the lift (140) that actuates to extend and retract the telescoping beam (144);
a pivot actuator (152) attached between the telescoping beam (144) and the front portion (142) of the conveying system (110); and
the robotic carton unloader (100) further comprises a controller (154) in communication with the pivot actuator (152), the drive member (146), and the robotic arm assembly (102), the controller (154) executes instructions to position a vertical height and pitch of the front portion (142) of the conveyor system (110) to parallel the manipulator head (136).

6. The robotic carton unloader (100) of claim 5, wherein the controller (154) positions the front portion (142) of the conveyor system (110) to retract cartons (104) received thereon onto the rear portion (158) of the conveyor system (110) between engagements and movements of at least one carton (104) by the manipulator head (136).

7. The robotic carton unloader (100) of claim 5, further comprising a transition carton guiding structure between the front portion (142) and a rear portion (158) of the conveyor system (110) that adjusts in length and pitch in response to movement of the lift (140) and that conveys cartons (104) from the front portion (142) to the rear portion (158).

8. The robotic carton unloader (100) of claim 1, wherein the upper arm assembly (128) comprises:

a rotatable gantry (220) having the rear end (130) pivotally attached at the upper arm axis (134) to the left and right lower arms (120) and having a lateral guide (222) at an extended end (224); and
an end arm (226) proximally attached for lateral movement to the lateral guide (222) of the rotatable gantry (220) and distally attached to the manipulator head (136).

9.  The robotic carton unloader (100) of claim 1, further comprising:

    a vision system that detects the at least one carton (104) in the carton pile (106);
    a pneumatic system (208) that selectively couples a source of vacuum (209) and a source of compressed air (210) to the at least one vacuum manipulator (206) of the manipulator head (136) to engage and release the at least one carton (104);
    a pressure sensor (216) in pneumatic communication with the pneumatic system (208) to detect a pressure indication associated with the at least one vacuum manipulator (206); and
    a controller (154) in communication with the vision system, the pneumatic system (208) and the pressure sensor (216), the controller (154) executes instructions to selectively clear debris from the at least one vacuum manipulator (206) by:

        receiving an image of the carton pile (106);
        detecting the at least one carton (104) in the carton pile (106) from the image;
        positioning the manipulator head (136) to engage the at least one carton (104) with the at least one vacuum manipulator (206);
        causing the pneumatic system (208) to couple the source of vacuum (209) to the at least one vacuum manipulator (206);
        moving the robotic arm assembly (102) to position the at least one carton (104) on the conveyor system (110);
        disengaging the at least one carton (104) by causing the pneumatic system (208) to decouple the source of vacuum (209) from the at least one vacuum manipulator (206);
        moving the robotic arm assembly (102) away from the at least one carton (104) to enable conveying of the at least one carton (104) by the conveyor system (110);
        determining that the at least one vacuum manipulator (206) is clogged with debris; and
        clearing debris from the at least one vacuum manipulator (206) by directing the pneumatic system (208) to couple the source of compressed air (210) to the at least one vacuum manipulator (206).

10. The robotic carton unloader (100) of claim 9, wherein the controller (154) determines that the at least one vacuum manipulator (206) is clogged with debris by:

    reimaging the carton pile (106); and
    detecting that the at least one carton (104) remains on the carton pile (106) after a previous attempt to engage and move to the conveyor system (110).

11. The robotic carton unloader (100) of claim 9, wherein the controller (154) determines that the at least one vacuum manipulator (206) is clogged with debris by detecting that the pressure indication is consistent with a blocked at least one vacuum manipulator (206) with the manipulator head (136) positioned away from the at least one carton (104).

12. The robotic carton unloader (100) of claim 1, further comprising:

    a vision system that obtains an image of any objects proximate to the mobile body (114);
    a controller (154) that executes instructions to position a selected one of the robotic arm assembly (102) and the mobile body (114), the controller (154) in communication with the vision system to:

        determine whether an object is proximate to the mobile body (114) that can be damaged by movement of the selected one of the robotic arm assembly (102) and the mobile body (114);
        in response to determining that the object is proximate to the mobile body (114) that can be damaged, prevent the movement of the selected one of the robotic arm assembly (102) and the mobile body (114).

13. The robotic carton unloader (100) of claim 12, further comprising a telecontrol interface to receive remote operator control inputs to the controller (154), wherein the controller (154) limits a response to the remote operator control inputs to prevent movement of the selected one of the robotic arm assembly (102) and the mobile body (114).

**14.** The robotic carton unloader (100) of claim 13, wherein the controller (154) determines whether an object is proximate to the mobile body (114) by performing image recognition of one of a carton (104) and a person.

**15.** The robotic carton unloader (100) of claim 1, further comprising:

a three-dimensional vision system that obtains an image of at least a portion of the robotic arm assembly (102); and
a controller (154) in communication with the three-dimensional vision system, the controller (154) executes instructions to calibrate the robotic arm assembly (102) by:

commanding the robotic arm assembly (102) to a defined position;
detecting the position of the robotic arm assembly (102) in the image received from the three- dimensional vision system; and
calculating a calibration adjustment based on an error between the defined position and the detected position.

**Patentansprüche**

**1.** Robotischer Kartonentlader (100) zum Entladen eines auf einem Boden (118) ruhenden Kartonstapels (106), umfassend:

einen beweglichen Körper (114), der über den Boden (118) bewegt werden kann;
ein Fördersystem (110), das auf dem beweglichen Körper (114) montiert ist, um entladene Kartons (104) darauf zu befördern; und
eine Roboterarm-Anordnung (102), umfassend:

rechte und linke untere Arme (120), die jeweils an einem unteren Ende (122) schwenkbar an dem beweglichen Körper (114) an gegenüberliegenden Seiten des Fördersystems (110) befestigt sind und zwischen diesen verlaufen, um sich um eine untere Armachse (124) zu drehen, die senkrecht zu einer Längsachse (126) des Fördersystems (110) verläuft;
eine obere Armanordnung (128) mit einem hinteren Ende (130), das schwenkbar an einem oberen Ende (132) des rechten bzw. linken unteren Arms (120) befestigt ist, um sich schwenkbar um eine obere Armachse (134) zu drehen, die senkrecht zur Längsachse (126) des Fördersystems (110) und parallel zur unteren Armachse (124) verläuft; und
einen Manipulatorkopf (136), der an einem vorderen Ende (138) der oberen Armanordnung (128) befestigt ist, wobei der Manipulatorkopf (136) jeweils mindestens einen Karton (104) eines auf einem Boden (118) ruhenden Kartonstapels (106) zur Bewegung zu dem Fördersystem (110) ergreift, wobei
eine Schwenkbewegung der rechten und linken unteren Arme (120) die obere Armachse (134) auf einer Höhe hält, die es ermöglicht, dass der mindestens eine Karton (104) durch das Fördersystem (110) befördert wird, ohne von der Roboterarm-Anordnung (102) behindert zu werden; und
der Manipulatorkopf (136) mindestens einen Vakuummanipulator (206) umfasst, **dadurch gekennzeichnet, dass** der robotische Kartonentlader (100) ferner ein pneumatisches System (208) umfasst, um selektiv eine Abfolge von Vorgängen auszuführen, bei denen (i) der mindestens eine Karton (104) mit einem Sog ergriffen wird; (ii) der mindestens eine Karton (104) durch Aufheben des Sogs gelöst wird; und (iii) Schmutz von dem mindestens einen Vakuummanipulator (206) durch Leiten von Druckluft durch den mindestens einen Vakuummanipulator (206) entfernt wird.

**2.** Robotischer Kartonentlader (100) nach Anspruch 1, ferner umfassend einen Heber (140), der zwischen dem beweglichen Körper (114) und einem vorderen Abschnitt (142) des Fördersystems (110) befestigt ist, wobei der Heber (140) den vorderen Abschnitt (142) des Fördersystems (110) relativ zum Boden (118) bewegt, um den Abstand unterhalb des mindestens einen Kartons (104) während der Bewegung vom Kartonstapel (106) zum Fördersystem (110) zu verringern.

**3.** Robotischer Kartonentlader (100) nach Anspruch 2, wobei der Heber (140) ferner umfasst:

einen Teleskopbalken (144), der zwischen dem beweglichen Körper (114) und dem vorderen Abschnitt (142) des Fördersystems (110) befestigt ist;

ein Antriebselement (146) des Hebers (140), das betätigt wird, um den Teleskopbalken (144) auszufahren und einzufahren, und das einen Ausfallmodus aufweist, der es dem Teleskopbalken (144) ermöglicht, einzufahren; und

einen Verriegelungsauslegermechanismus (148), der auf den Ausfallmodus des Antriebselements (146) anspricht, um zumindest eine Einfahrgeschwindigkeit des Teleskopbalkens (144) zu verlangsamen.

4. Robotischer Kartonentlader (100) nach Anspruch 3, wobei:

das Antriebselement (146) einen Riemenantrieb mit dem Ausfallmodus eines gerissenen Riemens umfasst; und der Verriegelungsauslegermechanismus (148) eine Quelle für gespeicherte Energie umfasst, die durch den gerissenen Riemen freigesetzt wird, um eine Verriegelung zwischen zwei Blöcken des Teleskopbalkens (144) zu betätigen.

5. Robotischer Kartonentlader (100) nach Anspruch 2, wobei:

der Heber (140) einen Teleskopbalken (144) aufweist, der schwenkbar an dem vorderen Abschnitt (142) des Fördersystems (110) zur Drehung um eine vordere Achse (150) befestigt ist, die quer zur Längsachse (126) des Fördersystems (110) und parallel zu den unteren und oberen Armachsen (124, 134) verläuft; ein Antriebselement (146) des Hebers (140) aufweist, das betätigt wird, um den Teleskopbalken (144) auszufahren und einzufahren; einen Schwenkaktuator (152) aufweist, der zwischen dem Teleskopbalken (144) und dem vorderen Abschnitt (142) des Fördersystems (110) befestigt ist; und der robotische Kartonentlader (100) ferner eine Steuerung (154) umfasst, die mit dem Schwenkaktuator (152), dem Antriebselement (146) und der Roboterarm-Anordnung (102) kommuniziert, wobei die Steuerung (154) Anweisungen ausführt, um eine vertikale Höhe und Neigung des vorderen Abschnitts (142) des Fördersystems (110) parallel zum Manipulatorkopf (136) zu positionieren.

6. Robotischer Kartonentlader (100) nach Anspruch 5, wobei die Steuerung (154) den vorderen Abschnitt (142) des Fördersystems (110) positioniert, um darauf aufgenommene Kartons (104) auf den hinteren Abschnitt (158) des Fördersystems (110) zwischen Ergreifen und Bewegen von mindestens einem Karton (104) durch den Manipulatorkopf (136) zurückzuziehen.

7. Robotischer Kartonentlader (100) nach Anspruch 5, ferner umfassend eine Kartonführungsstruktur für den Übergang zwischen dem vorderen Abschnitt (142) und einem hinteren Abschnitt (158) des Fördersystems (110), die sich als Reaktion auf die Bewegung des Hebers (140) in Länge und Neigung anpasst und Kartons (104) von dem vorderen Abschnitt (142) zu dem hinteren Abschnitt (158) befördert.

8. Robotischer Kartonentlader (100) nach Anspruch 1, wobei die obere Armanordnung (128) umfasst:

ein drehbares Portal (220), dessen hinteres Ende (130) an der oberen Armachse (134) schwenkbar zu den linken und rechten unteren Armen (120) befestigt ist und das an einem verlängerten Ende (224) eine seitliche Führung (222) aufweist; und

einen Endarm (226), der proximal zur seitlichen Bewegung an der seitlichen Führung (222) des drehbaren Portals (220) und distal am Manipulatorkopf (136) befestigt ist.

9. Robotischer Kartonentlader (100) nach Anspruch 1, ferner umfassend:

ein Sichtsystem, das den mindestens einen Karton (104) in dem Kartonstapel (106) erkennt; ein pneumatisches System (208), das selektiv eine Vakuumquelle (209) und eine Druckluftquelle (210) mit dem mindestens einen Vakuummanipulator (206) des Manipulatorkopfes (136) koppelt, um den mindestens einen Karton (104) zu ergreifen und zu lösen; einen Drucksensor (216), der in pneumatischer Verbindung mit dem pneumatischen System (208) steht, um eine mit dem mindestens einen Vakuummanipulator (206) verbundene Druckangabe zu erkennen; und eine Steuerung (154), die mit dem Sichtsystem, dem pneumatischen System (208) und dem Drucksensor (216) kommuniziert, wobei die Steuerung (154) Anweisungen ausführt, um selektiv Schmutz von dem mindestens einen Vakuummanipulator (206) zu entfernen, durch:

Empfangen eines Bildes des Kartonstapels (106);

Erkennen des mindestens einen Kartons (104) in dem Kartonstapel (106) aus dem Bild;

Positionieren des Manipulatorkopfes (136), um den mindestens einen Karton (104) mit dem mindestens einen Vakuummanipulator (206) zu ergreifen;

Bewirken, dass das pneumatische System (208) die Vakuumquelle (209) mit dem mindestens einen Vakuummanipulator (206) koppelt;

Bewegen der Roboterarm-Anordnung (102), um den mindestens einen Karton (104) auf dem Fördersystem (110) zu positionieren;

Lösen des mindestens einen Kartons (104), durch Bewirken, dass das pneumatische System (208) die Vakuumquelle (209) von dem mindestens einen Vakuummanipulator (206) entkoppelt;

Bewegen der Roboterarm-Anordnung (102) weg von dem mindestens einen Karton (104), um eine Beförderung des mindestens einen Kartons (104) durch das Fördersystem (110) zu ermöglichen;

Bestimmen, dass der mindestens eine Vakuummanipulator (206) mit Schmutz verstopft ist; und

Entfernen von Schmutz von dem mindestens einen Vakuummanipulator (206) durch Anweisen des pneumatischen Systems (208), die Druckluftquelle (210) mit dem mindestens einen Vakuummanipulator (206) zu koppeln.

10. Robotischer Kartonentlader (100) nach Anspruch 9, wobei die Steuerung (154) bestimmt, dass der mindestens eine Vakuummanipulator (206) mit Schmutz verstopft ist, durch:

Erneute Abbildung des Kartonstapels (106); und

Erkennen, dass der mindestens eine Karton (104) im Kartonstapel (106) verbleibt, nachdem zuvor versucht wurde, den Karton zu ergreifen und auf das Fördersystem (110) zu bewegen.

11. Robotischer Kartonentlader (100) nach Anspruch 9, wobei die Steuerung (154) bestimmt, dass der mindestens eine Vakuummanipulator (206) mit Schmutz verstopft ist, indem sie erkennt, dass die Druckangabe mit mindestens einem verstopften Vakuummanipulator (206) übereinstimmt, wobei der Manipulatorkopf (136) von dem mindestens einen Karton (104) weg positioniert ist.

12. Robotischer Kartonentlader (100) nach Anspruch 1, ferner umfassend:

ein Sichtsystem, das ein Bild von beliebigen Objekten in der Nähe des beweglichen Körpers (114) aufnimmt;

eine Steuerung (154), die Anweisungen ausführt, um entweder die ausgewählte Roboterarm-Anordnung (102) oder den ausgewählten beweglichen Körper (114) zu positionieren, wobei die Steuerung (154) mit dem Sichtsystem kommuniziert, um:

zu bestimmen, ob sich ein Objekt in der Nähe des beweglichen Körpers (114) befindet, das durch die Bewegung entweder der ausgewählten Roboterarm-Anordnung (102) oder des ausgewählten beweglichen Körpers (114) beschädigt werden kann;

als Reaktion auf die Bestimmung, dass das Objekt in der Nähe des beweglichen Körpers (114) beschädigt werden kann, die Bewegung entweder der ausgewählten Roboterarm-Anordnung (102) oder des ausgewählten beweglichen Körpers (114) zu verhindern.

13. Robotischer Kartonentlader (100) nach Anspruch 12, ferner umfassend eine Fernsteuerungsschnittstelle zum Empfangen von Fernbedienungseingaben eines Bedieners an die Steuerung (154), wobei die Steuerung (154) eine Reaktion auf die Fernbedienungseingaben eines Bedieners einschränkt, um eine Bewegung entweder der ausgewählten Roboterarm-Anordnung (102) oder des ausgewählten beweglichen Körpers (114) zu verhindern.

14. Robotischer Kartonentlader (100) nach Anspruch 13, wobei die Steuerung (154) bestimmt, ob sich ein Objekt in der Nähe des beweglichen Körpers (114) befindet, indem sie eine Bilderkennung entweder eines Kartons (104) oder einer Person durchführt.

15. Robotischer Kartonentlader (100) nach Anspruch 1, ferner umfassend:

ein dreidimensionales Sichtsystem, das ein Bild von mindestens einem Teil der Roboterarm-Anordnung (102) aufnimmt; und

eine Steuerung (154), die mit dem dreidimensionalen Sichtsystem kommuniziert, wobei die Steuerung (154) Anweisungen ausführt, um die Roboterarm-Anordnung (102) zu kalibrieren, durch:

Befehligen der Roboterarm-Anordnung (102) in eine definierte Position;
Erkennen der Position der Roboterarm-Anordnung (102) in dem von dem dreidimensionalen Sichtsystem empfangenen Bild; und
Berechnen einer Kalibrierungsanpassung auf Grundlage eines Fehlers zwischen der definierten Position und der erkannten Position.

## Revendications

1. Système robotique de déchargement de cartons (100) pour décharger une pile de cartons (106) posée sur un plancher (118), comprenant :

   un corps mobile (114) déplaçable sur le plancher (118) ;
   un système de convoyeur (110) monté sur le corps mobile (114) pour y convoyer des cartons déchargés (104) ; et
   un ensemble de bras robotique (102) comprenant :

   des bras inférieurs droit et gauche (120) fixés de manière pivotante à une extrémité inférieure (122) respectivement au corps mobile (114) sur des côtés latéraux opposés du système de convoyeur (110) passant entre eux pour tourner autour d'un axe de bras inférieur (124) qui est perpendiculaire à un axe longitudinal (126) du système de convoyeur (110) ;
   un ensemble de bras supérieur (128) ayant une extrémité arrière (130) fixée de manière pivotante à une extrémité supérieure (132) respectivement des bras inférieurs droit et gauche (120) pour tourner de manière pivotante autour d'un axe de bras supérieur (134) qui est perpendiculaire à l'axe longitudinal (126) du système de convoyeur (110) et parallèle à l'axe de bras inférieur (124) ; et
   une tête de manipulation (136) fixée à une extrémité avant (138) de l'ensemble de bras supérieur (128), la tête de manipulation (136) engage au moins un carton (104) à la fois à partir d'une pile de cartons (106) posée sur un plancher (118) pour le déplacer vers le système de convoyeur (110), dans lequel
   un déplacement de pivotement des bras inférieurs droit et gauche (120) maintient l'axe de bras supérieur (134) à une hauteur qui permet à l'au moins un carton (104) d'être convoyé par le système de convoyeur (110) sans être gêné par l'ensemble de bras robotique (102) ; et
   la tête de manipulation (136) comprend au moins un manipulateur à vide (206), **caractérisé en ce que** le système robotique de déchargement de cartons (100) comprend en outre un système pneumatique (208) pour effectuer sélectivement une séquence d'opérations consistant à (i) engager l'au moins un carton (104) par aspiration ; (ii) dégager l'au moins un carton (104) en supprimant l'aspiration ; et (iii) éliminer les débris de l'au moins un manipulateur à vide (206) en dirigeant de l'air comprimé à travers l'au moins un manipulateur à vide (206).

2. Système robotique de déchargement de cartons (100) selon la revendication 1, comprenant en outre un élévateur (140) fixé entre le corps mobile (114) et une partie avant (142) du système de convoyeur (110), l'élévateur (140) déplace la partie avant (142) du système de convoyeur (110) par rapport au plancher (118) pour réduire l'espacement sous l'au moins un carton (104) pendant le déplacement de la pile de cartons (106) vers le système de convoyeur (110).

3. Système robotique de déchargement de cartons (100) selon la revendication 2, dans lequel l'élévateur (140) comprend en outre :

   une poutre télescopique (144) fixée entre le corps mobile (114) et la partie avant (142) du système de convoyeur (110) ;
   un élément d'entraînement (146) de l'élévateur (140) qui s'actionne pour étendre et rétracter la poutre télescopique (144) et possède un mode de défaillance qui permet à la poutre télescopique (144) de se rétracter ; et
   un mécanisme de flèche de verrouillage (148) sensible au mode de défaillance de l'élément d'entraînement (146) pour au moins ralentir une vitesse de rétraction de la poutre télescopique (144).

4. Système robotique de déchargement de cartons (100) selon la revendication 3, dans lequel :

   l'élément d'entraînement (146) comprend un entraînement par courroie ayant le mode de défaillance d'une courroie cassée ; et
   le mécanisme de flèche de verrouillage (148) comprend une source d'énergie stockée libérée par la courroie cassée pour actionner un verrou entre deux blocs de la poutre télescopique (144).

5. Système robotique de déchargement de cartons (100) selon la revendication 2, dans lequel :

l'élévateur (140) a une poutre télescopique (144) qui est fixée de manière pivotante à la partie avant (142) du système de convoyeur (110) pour une rotation autour d'un axe avant (150) qui est transversal à l'axe longitudinal (126) du système de convoyeur (110) et parallèle aux axes de bras inférieur et supérieur (124, 134) ;
un élément d'entraînement (146) de l'élévateur (140) s'actionne pour étendre et rétracter la poutre télescopique (144) ;
un actionneur de pivot (152) est fixé entre la poutre télescopique (144) et la partie avant (142) du système de convoyeur (110) ; et
le système robotique de déchargement de cartons (100) comprend en outre une unité de commande (154) en communication avec l'actionneur de pivot (152), l'élément d'entraînement (146) et l'ensemble de bras robotique (102), l'unité de commande (154) exécute des instructions pour positionner une hauteur et un pas verticaux de la partie avant (142) du système de convoyeur (110) parallèlement à la tête de manipulation (136).

6. Système robotique de déchargement de cartons (100) selon la revendication 5, dans lequel l'unité de commande (154) positionne la partie avant (142) du système de convoyeur (110) pour rétracter les cartons (104) qu'il reçoit sur la partie arrière (158) du système de convoyeur (110) entre les engagements et les déplacements d'au moins un carton (104) par la tête de manipulation (136).

7. Système robotique de déchargement de cartons (100) selon la revendication 5, comprenant en outre une structure de guidage de carton de transition entre la partie avant (142) et une partie arrière (158) du système de convoyeur (110) qui s'ajuste en longueur et en pas en réponse au déplacement de l'élévateur (140) et qui convoie des cartons (104) de la partie avant (142) vers la partie arrière (158).

8. Système robotique de déchargement de cartons (100) selon la revendication 1, dans lequel l'ensemble de bras supérieur (128) comprend :

un portique rotatif (220) ayant l'extrémité arrière (130) fixée de manière pivotante au niveau de l'axe de bras supérieur (134) aux bras inférieurs gauche et droit (120) et ayant un guide latéral (222) à une extrémité étendue (224) ; et
un bras d'extrémité (226) fixé de manière proximale pour un déplacement latéral au guide latéral (222) du portique rotatif (220) et fixé de manière distale à la tête de manipulation (136).

9. Système robotique de déchargement de cartons (100) selon la revendication 1, comprenant en outre :

un système de vision qui détecte l'au moins un carton (104) dans la pile de cartons (106) ;
un système pneumatique (208) qui accouple sélectivement une source de vide (209) et une source d'air comprimé (210) à l'au moins un manipulateur à vide (206) de la tête de manipulation (136) pour engager et libérer l'au moins un carton (104) ;
un capteur de pression (216) en communication pneumatique avec le système pneumatique (208) pour détecter une indication de pression associée à l'au moins un manipulateur à vide (206) ; et
une unité de commande (154) en communication avec le système de vision, le système pneumatique (208) et le capteur de pression (216), l'unité de commande (154) exécute des instructions pour éliminer sélectivement des débris de l'au moins un manipulateur à vide (206) comme suit :

en recevant une image de la pile de cartons (106) ;
en détectant l'au moins un carton (104) dans la pile de cartons (106) à partir de l'image ;
en positionnant la tête de manipulation (136) pour engager l'au moins un carton (104) avec l'au moins un manipulateur à vide (206) ;
en amenant le système pneumatique (208) à accoupler la source de vide (209) à l'au moins un manipulateur à vide (206) ;
en déplaçant l'ensemble de bras robotique (102) pour positionner l'au moins un carton (104) sur le système de convoyeur (110) ;
en dégageant l'au moins un carton (104) en amenant le système pneumatique (208) à découpler la source de vide (209) de l'au moins un manipulateur à vide (206) ;
en éloignant l'ensemble bras robotique (102) de l'au moins un carton (104) pour permettre le convoyage de l'au moins un carton (104) par le système de convoyeur (110) ;

en déterminant que l'au moins un manipulateur à vide (206) est obstrué par des débris ; et

en éliminant les débris de l'au moins un manipulateur à vide (206) en dirigeant le système pneumatique (208) pour accoupler la source d'air comprimé (210) à l'au moins un manipulateur à vide (206).

10. Système robotique de déchargement de cartons (100) selon la revendication 9, dans lequel l'unité de commande (154) détermine que l'au moins un manipulateur à vide (206) est obstrué par des débris comme suit :

en recréant une image de la pile de cartons (106) ; et

en détectant que l'au moins un carton (104) reste sur la pile de cartons (106) après une tentative précédente d'engagement et de déplacement vers le système de convoyeur (110).

11. Système robotique de déchargement de cartons (100) selon la revendication 9, dans lequel l'unité de commande (154) détermine que l'au moins un manipulateur à vide (206) est obstrué par des débris en détectant que l'indication de pression est cohérente avec le blocage d'au moins un manipulateur à vide (206) avec la tête de manipulation (136) positionnée à distance de l'au moins un carton (104).

12. Système robotique de déchargement de cartons (100) selon la revendication 1, comprenant en outre :

un système de vision qui obtient une image de tout objet à proximité du corps mobile (114) ;

une unité de commande (154) qui exécute des instructions pour positionner un élément sélectionné parmi l'ensemble de bras robotique (102) et le corps mobile (114), l'unité de commande (154) étant en communication avec le système de vision pour :

déterminer si un objet est ou non à proximité du corps mobile (114) qui peut être endommagé par le déplacement de l'élément sélectionné parmi l'ensemble de bras robotique (102) et le corps mobile (114) ;

en réponse à la détermination que l'objet est à proximité du corps mobile (114) qui peut être endommagé, empêcher le déplacement de l'élément sélectionné parmi l'ensemble de bras robotique (102) et le corps mobile (114).

13. Système robotique de déchargement de cartons (100) selon la revendication 12, comprenant en outre une interface de télécommande pour recevoir des entrées de commande d'opérateur à distance vers l'unité de commande (154), dans lequel l'unité de commande (154) limite une réponse aux entrées de commande d'opérateur à distance pour empêcher le déplacement de l'élément sélectionné parmi l'ensemble de bras robotique (102) et le corps mobile (114).

14. Système robotique de déchargement de cartons (100) selon la revendication 13, dans lequel l'unité de commande (154) détermine si un objet est ou non proche du corps mobile (114) en effectuant une reconnaissance d'image d'un élément parmi un carton (104) et une personne.

15. Système robotique de déchargement de cartons (100) selon la revendication 1, comprenant en outre :

un système de vision tridimensionnelle qui obtient une image d'au moins une partie de l'ensemble de bras robotique (102) ; et

une unité de commande (154) en communication avec le système de vision tridimensionnelle, l'unité de commande (154) exécute des instructions pour étalonner l'ensemble de bras robotique (102) comme suit :

en commandant l'ensemble de bras robotique (102) vers une position définie ;

en détectant la position de l'ensemble de bras robotique (102) dans l'image reçue du système de vision tridimensionnelle ; et

en calculant un ajustement d'étalonnage sur la base d'une erreur entre la position définie et la position détectée.

**FIG. 1**

Telecontrol Workstation
**190**

194

196

Telecontrol GUI
**192**

Warehouse Management System (WMS)
**184**

Warehouse Control System (WCS)
**188**

Warehouse Execution System (WES)
**182**

Onboard Unloader Controller
**154**

Shadow Mode
**156**

Self Calibration
**174**

Obstruction Detect
**180**

Safety Lockout
**204**

Telecontroller
**198**

Suction Monitoring
**218**

Pneumatic System
**208**

Vacuum Source
**209**

Debris Filter
**214**

Compressed Air Source
**210**

Pressure Sensor
**216**

Rear Vision Sensor
**200**

Front Vision Sensor
**172**

Boom Locking Mechanism
**148**

Material Handling System
**116**

Vision-Based Lead-Follower System
**217**

Bypass Control
**168**

Front Jacking Actuator
**164**

EP 3 484 668 B1

31

**FIG. 2**

FIG. 3

*FIG. 4*

*FIG. 5*

100

L

L2

b

142

140

**FIG. 6**

100

X4

A4

r4

L4

142

140

**FIG. 7**

FIG. 8A

FIG. 8B

EP 3 484 668 B1

FIG. 9A

FIG. 9B

FIG. 9C

FIG. 9D

FIG. 9E

FIG. 9F

FIG. 9H

FIG. 9G

**FIG. 10**

**FIG. 11**

**FIG. 12**

*FIG. 13*

*FIG. 14*

*FIG. 15*

*FIG. 16*

*FIG. 17*

*FIG. 18*

*FIG. 19*

45

FIG. 20

FIG. 21

**FIG. 22**

**FIG. 23**

FIG. 24

2500   2502   2514   2510   2512

2504

2515   2508

2506

**FIG. 25**

2500   2502   2510   2512
2504   2506   2515   2516

2504   2516

2510

**FIG. 26**

FIG. 27

FIG. 28

FIG. 29

FIG. 30

FIG. 31

*FIG. 32*

EP 3 484 668 B1

3300 — Relationship between Error and the distance from tag to camera

*Real Distance between camera and tag (mm)*

——Error

*FIG. 33*

**EP 3 484 668 B1**

**REFERENCES CITED IN THE DESCRIPTION**

**Patent documents cited in the description**

- WO 2016033172 A
- US 2008267756 A
- US 2016016311 A